(19) Europäisches Patentamt / European Patent Office / Office européen des brevets

(11) **EP 3 898 823 B1**

(12) **EUROPEAN PATENT SPECIFICATION**

(45) Date of publication and mention
of the grant of the patent:
**16.08.2023 Bulletin 2023/33**

(21) Application number: **19838963.7**

(22) Date of filing: **20.12.2019**

(51) International Patent Classification (IPC):
*C08L 9/00* (2006.01)   *B60C 1/00* (2006.01)
*C08K 9/10* (2006.01)   *C08L 21/00* (2006.01)

(52) Cooperative Patent Classification (CPC):
(C-Sets available)
**C08L 21/00; B60C 1/00; C08L 9/00**   (Cont.)

(86) International application number:
**PCT/IB2019/061157**

(87) International publication number:
**WO 2020/128985 (25.06.2020 Gazette 2020/26)**

(54) **CAPSULES COMPRISING ADDITIVES FOR TYRE COMPOUNDS, PREPARATION METHOD AND USE FOR THE PRODUCTION OF TYRES**

KAPSELN ENTHALTEND ADDITIVE FÜR REIFENBESTANDTEILE, HERSTELLUNGSMETHODE UND VERWENDUNG ZUR HERSTELLUNG VON REIFEN

CAPSULES COMPRENANT DES ADDITIFS POUR DES COMPOSANTS DE PNEUS, MÉTHODE DE PRÉPARATION ET UTILISATION POUR LA PRÉPARATION DE PNEUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2018 IT 201800020728**

(43) Date of publication of application:
**27.10.2021 Bulletin 2021/43**

(73) Proprietor: **Pirelli Tyre S.p.A.**
**20126 Milano (IT)**

(72) Inventors:
• **SUSANNA, Antonio**
**20126 Milano (IT)**
• **DONETTI, Raffaella**
**20126 Milano (IT)**
• **HANEL, Thomas**
**20126 Milano (IT)**

• **BRAZZO, Paolo**
**20126 Milano (IT)**
• **BEVERINA, Luca**
**20126 Milano (IT)**

(74) Representative: **PGA S.p.A.**
**Via Mascheroni, 31**
**20145 Milano (IT)**

(56) References cited:
**EP-A1- 1 915 424   WO-A1-2005/108480**

(52) Cooperative Patent Classification (CPC): (Cont.)

C-Sets
**C08L 9/00, C08L 9/06, C08K 9/10, C08K 5/0025,
C08K 3/013**

**Description**

FIELD OF THE INVENTION

The present invention relates to capsules comprising additives for tyre compounds, to processes for their preparation and to their use in the production of tyres for vehicle wheels.

PRIOR ART

In the tyre industry it is common practice to add reinforcing fillers and additives of various kinds to the tyres to improve the properties thereof.

For example, reinforcing fillers are commonly used to impart good mechanics and abrasion resistance; vulcanising agents and vulcanisation additives such as activating agents, accelerants and retardants to cross-link the rubber and modify the hardness, resistance and elasticity thereof; compatibilising agents for bonding reinforcing silica to rubber; and others to preserve or modify the compounds such as for example waxes, plasticising agents, anti-ageing agents, adhesives, antiozone agents, modifying resins and the like.

Typically the additives are incorporated into the elastomeric material directly or optionally in the form of concentrated masterbatches, in one or more steps, by mixing and possibly heating in suitable mixers.

Many of the commonly used additives, however, have more or less marked problems of dispersibility, due to their poor chemical affinity for the elastomeric mass, therefore requiring prolonged processes for the incorporation, possibly resulting, especially in the case of mixtures of different elastomeric polymers, in non-homogeneous distributions, with a greater concentration of additives in the more similar steps. The dispersion is even more critical for those additives which are used in quantities of a few phr.

The dispersion of each specific additive in the elastomeric mass is influenced both by the diffusion coefficient in each of the elastomeric polymers present, and by the processing conditions applied, for example, by the type of mixer, the duration of the mixing and the temperature.

Due to the non-uniform dispersion of the additives in the elastomeric material, the properties of the vulcanised compounds may be sub-optimal, thus negatively affecting the performance of the tyres that incorporate them.

The vulcanising agents and the vulcanisation additives are those most affected by the difficulties of dispersion in the elastomers and, consequently, can give rise to critical issues in the vulcanised compound.

In order to try to solve these problems, the incorporation of additives into suitable capsules has been proposed in the literature.

Document US6984450 dealt with the problem of poor solubility and inhomogeneous dispersion of sulphur and vulcanisation additives in the tyres and proposes their incorporation into capsules composed of lipophilic materials with high affinity for the elastomeric matrix, such as waxes, paraffins, polyethylenes, ethylene-vinyl acetate copolymers, polyvinyl alcohols and mixtures thereof. These non-cross-linked materials were subjected to melting and complete flaking at temperatures well below 140 °C, completely releasing the encapsulated product since the beginning of the vulcanisation. In the experimental part, some preparations of capsules melting at 125 °C were reported but not examples relating to their incorporation in elastomeric compounds.

Document JP2002-226635 described the encapsulation of vulcanising agents and accelerants in resins that could be degraded by irradiation, with a radical mechanism, thus releasing the encapsulated products. These resins were not cross-linked.

Examples of suitable resins were polystyrene, polyethylene, polypropylene, polyurethane, nylon, acrylic resin, methacrylic resin, ethylene-acrylic copolymer, ethylene-acetate copolymer, vinyl chloride resin, butadiene resin, polycarbonate, acrylonitrile butadiene styrene resin (ABS), styrene acrylonitrile resin (AS), polyacetal, polyester and the like. The document exemplified the preparation of polystyrene and polyvinyl alcohol capsules, containing sulphur, with a melting and flaking point of the capsule around 100 °C, and their incorporation into rubbers.

EP1915424 A1 relates to a microcapsule having a polymeric wall and a core comprising at least one additive for rubbers; such a microcapsule can be used in elastomeric compositions.

WO2005/108480 A1 relates to an elastomeric composition comprising microencapsulated sulphur and free sulphur; this composition is useful in the preparation of rubber articles, such as for example tyres.

EP3476893 A1 relates to a compound for the preparation of tyre parts; such a compound comprises a microencapsulated vulcanisation accelerant.

None of these documents describe or suggest a capsule coating whereof comprises at least one cross-linked polymer obtained by cross-linking at least one cross-linkable polymer selected from cellulose derivatives, starch and derivatives, chitosans, alginates, polyesters, phenol-formaldehyde resins, urea-formaldehyde resins, anhydrides derivatised NR, NBR or EPDM rubbers.

## SUMMARY OF THE INVENTION

The Applicant has dealt with the problem of the difficult and non-homogeneous incorporation of the additives in the elastomeric compounds for tyres and, in this regard, has conducted encapsulation studies.

As part of this activity, the Applicant has found that by introducing the additives in capsules coated with cross-linked material, an excellent dispersion of the same in the elastomeric material is obtained due not only to the high affinity of the capsules for the elastomeric mass but also to the possibility of mixing for prolonged times and/or higher temperatures, due to their remarkable thermal and mechanical stability, benefiting from the better processability of the elastomeric mass and at the same time preserving the effectiveness of the encapsulated products.

Without wishing to be bound to any particular interpretation, the Applicant hypothesised that the greater thermal and mechanical stability induced by the cross-linking of the present capsules would allow their opening to be delayed, obtaining a better dispersion thereof in the elastomeric material made more malleable by prolonged processing and/or by the heating applicable in the mixing step. Only upon exceeding the softening temperature of the cross-linked coating, the present capsules, already homogeneously dispersed in the elastomeric mass, would flake, thus releasing the encapsulated additives.

Depending on the type of additive, it will therefore be possible to plan when to introduce the capsules into the compound and, by selecting the processing duration and temperature appropriately, when to release the additive encapsulated therein, to optimise the dispersion thereof and thus the final properties of the compound.

Furthermore, the encapsulation of the additives in the present cross-linked capsules allows protecting them more from the environmental degradation, caused by ultraviolet light, from heat, from oxidation to the air or from chemical agents, during their handling and storage.

Advantageously, the present capsules allow the homogeneous distribution even of those additives normally used in very low quantities, which are difficult to disperse well in the elastomeric material, generally requiring pre-dilution in concentrated masterbatches.

Finally, the present capsules advantageously allow preventing possible problems linked for example to toxicity, stickiness, dustiness, tendency to aggregation or evaporation of some additives.

A first aspect of the present invention therefore is a capsule comprising a coating and a core, wherein

the coating comprises at least one cross-linked polymer obtained by cross-linking at least one cross-linkable polymer selected from cellulose derivatives, starch and derivatives, chitosans, alginates, polyesters, phenol-formaldehyde resins, urea-formaldehyde resins, anhydrides derivatised NR, NBR or EPDM rubbers with at least one cross-linking agent as defined in claim 1 and wherein
the core comprises at least one additive for tyre compounds (A).

A further aspect of the present invention is an emulsion process for the preparation of the cross-linked capsules according to the invention, which comprises

- providing a solution of at least one cross-linkable polymer, selected from cellulose derivatives, starch and derivatives, chitosans, alginates, polyesters, phenol-formaldehyde resins, urea-formaldehyde resins, anhydrides derivatised NR, NBR or EPDM rubbers, at least one additive for tyre compounds (A) and, possibly, at least one cross-linking agent as defined in claim 1, in at least one suitable organic solvent immiscible with water (organic phase),
- providing an aqueous phase,
- providing at least one non-ionic surfactant, possibly dissolved in said aqueous phase,
- mixing together said organic phase, said aqueous phase and said at least one surfactant up to providing an emulsion,
- adding to the emulsion, if not already present, the at least one cross-linking agent,
- allowing the emulsion to react, preferably under stirring, in order to produce non-cross-linked capsules,
- isolating the non-cross-linked capsules from the emulsion, and
- subjecting the capsules to cross-linking by heating

thus obtaining the cross-linked capsules.

A further aspect of the present invention is a capsule obtainable according to the process of the invention described above.

A further aspect of the invention is an elastomeric composition for tyres comprising at least

0.1 to 50 phr of at least one additive for tyre compounds (A) encapsulated in capsules according to the invention,
100 phr of at least one diene elastomeric polymer (B),
0 to 120 phr of at least one reinforcing filler (C), and
optionally, 0.1 to 15 phr of at least one vulcanising agent (D), if not already incorporated in the aforesaid capsules.

A further aspect of the present invention is a vulcanisable elastomeric compound for tyres obtained by mixing and possibly heating the components of the elastomeric composition for tyres of the invention, or a vulcanised elastomeric compound obtained by vulcanisation thereof.

A further aspect of the present invention is a process for the preparation of a vulcanisable elastomeric compound for tyres of the invention, said process comprising one or more mixing steps in at least one suitable mixer of

- at least one additive for tyre compounds (A) encapsulated in capsules according to the invention,
- at least one diene elastomeric polymer (B),
- at least one reinforcing filler (C), and
- optionally at least one vulcanising agent (D).

A further aspect of the present invention is a component of a tyre comprising the vulcanisable compound of the invention or the vulcanised compound obtained by vulcanisation thereof.

A further aspect of the present invention is a tyre for vehicle wheels comprising at least one component of a tyre of the invention.

A further aspect of the present invention is the use of the capsules according to the invention for the incorporation into elastomeric compounds for tyres of at least one additive for tyre compounds (A).

DEFINITIONS

For the purposes of the present description and of the following claims, the term "phr" (parts per hundreds of rubber) means the parts by weight of a given component of the elastomeric composition by 100 parts by weight of the diene elastomeric polymer.

Unless otherwise indicated, all the percentages are expressed as percentages by weight.

In the present description, the term "elastomeric polymer" or "rubber" or "elastomer" means a natural or synthetic polymer which, after vulcanisation, at room temperature can be stretched repeatedly to at least twice its original length and which, after removal of the tensile load substantially immediately returns with force to approximately its original length (according to the definitions of the ASTM D1566-11 Standard terminology relating to Rubber).

The term "additive for tyre compounds" means a product which is conventionally incorporated into elastomeric compounds to modify one or more properties thereof. Typically the additives for tyre compounds are also indicated as micro-ingredients, in consideration of the minimum quantities used, generally lower than 30 phr, preferably lower than 20 phr, more preferably lower than 10 phr.

The term "elastomeric composition for tyres" means a composition comprising at least one diene elastomeric polymer and one or more additives, which by mixing and possible heating provides an elastomeric compound suitable for use in tyre components.

The components of the elastomeric composition are not generally introduced simultaneously into the mixer but typically added in sequence.

In the final vulcanisable elastomeric compound, the individual components of the elastomeric composition may be altered or no longer individually traceable as modified, completely or in part, due to the interaction with the other components, of heat and/or mechanical processing. The term "elastomeric composition" herein is meant to include the set of all the components that are added in the preparation of the elastomeric compound, regardless of whether they are all actually present simultaneously, are introduced sequentially or are then traceable in the elastomeric compound or in the final tyre.

The term "elastomeric compound" refers to the product obtainable by mixing and possibly heating at least one elastomeric polymer with at least one of the additives commonly used in the preparation of tyre compounds.

The term "non-vulcanisable elastomeric compound" indicates the product obtainable by mixing and possibly heating at least one elastomeric polymer with at least one of the additives commonly used in the preparation of tyre compounds, with the exception of vulcanising agents.

The term "vulcanisable elastomeric compound" indicates an elastomeric compound ready for vulcanisation, obtainable by incorporation into a non-vulcanisable elastomeric compound of all the additives, including those of vulcanisation.

The term "vulcanised elastomeric compound" means the material obtainable by vulcanisation of a vulcanisable elastomeric compound.

The term green is generally used to indicate a material, a compound, a composition, a component or a tyre not yet vulcanised.

The term "cross-linked polymer" indicates a polymer in which adjacent linear molecular chains are joined in different positions by covalent bonds to give a network structure.

The term "reinforcing filler" indicates a reinforcing material for tyres, including white fillers, typically used in the field to improve the mechanical properties of tyres such as carbon black, silica, diatomaceous earth, calcium carbonate, titanium dioxide, talc, alumina, aluminosilicates, kaolin, silicate fibres and mixtures thereof.

The term "white filler" refers to a reinforcing material for tyres typically used in the field to improve the mechanical properties of tyres such as silica, conventional silicates, such as sepiolite, paligorskite also known as attapulgite, montmorillonite, alloisite and the like, or silicates possibly modified by acid treatment and/or derivatised. Typically, white fillers have surface hydroxyl groups.

The term "vulcanising agent" indicates a product capable of transforming natural or synthetic rubber into elastic and resistant material due to the formation of a three-dimensional network of inter- and intra-molecular bonds.

The term "vulcanisation accelerant" indicates a product capable of decreasing the duration of the vulcanisation process and/or the operating temperature, such as TBBS.

The term "vulcanisation activating agent" indicates a product capable of further facilitating the vulcanisation, making it happen in shorter times and possibly at lower temperatures. An example of activating agent is the stearic acid-zinc oxide system. The term "vulcanisation retardant", also referred to as "early cross-linking inhibitor", indicates a product capable of delaying the onset of the vulcanisation reaction and/or suppressing undesired secondary reactions, for example N-(cyclohexylthio)phthalimide (CTP).

The term "vulcanisation package" is meant to indicate the vulcanising agent and one or more vulcanisation additives selected from among vulcanisation activating agents, accelerants and retardants.

The term "mixing step (1)" indicates the step of the production process of the elastomeric compound in which one or more additives can be incorporated by mixing and possibly heating, except for the vulcanising agent which is fed in step (2). The mixing step (1) is also referred to as "non-productive step".

The term "mixing step (2)" indicates the next step of the production process of the elastomeric compound in which the vulcanising agent (D) and, possibly, the other additives of the vulcanisation package are introduced into the elastomeric compound obtained from step (1), and mixed in the material, at controlled temperature, generally at a compound temperature lower than 120 °C, so as to provide the vulcanisable elastomeric compound. The mixing step (2) is also referred to as "productive step".

The term "discontinuous or batch mixer" indicates a mixing device adapted to be periodically fed with the elastomeric composition components in predefined amounts (batches) and mix them for a predetermined time so as to obtain the elastomeric composition. At the end of mixing, the resulting elastomeric composition is fully unloaded from the mixing device in a single solution.

Typically, a batch mixer comprises a pair of tangential or interpenetrating rotors housed in a mixing chamber and rotating in opposite direction, so as to mix the components introduced into the mixing chamber through its top.

To this end, the batch mixer may be provided with a pneumatic or hydraulic cylinder positioned at the top of the mixing chamber and a piston that moves both upwards, to open the mixing chamber, thereby allowing the introduction of ingredients of the composition by specific loading hoppers, and downwards, so as to exert pressure on the material being worked in the mixing chamber and located above the pair of rotors.

A pneumatic or hydraulic system positioned on the bottom of the mixing chamber enables the unloading of the elastomeric composition at the end of the mixing cycle through the opening of a dedicated inlet.

Specific examples of batch mixers that can be advantageously used according to the present invention are of the closed (Banbury®, Intermix®, Tandem Mixer HF) or open (open mill or Z-blade) type.

In the present description, the term "continuous mixer" indicates a mixing device suitable for receiving the ingredients of an elastomeric composition as a continuous feeding, mixing and/or reworking them in order to produce and unload an elastomeric composition in a continuous stream (except for possible stops of the mixing device due to maintenance, or elastomeric composition recipe change) in contrast to the periodic loading/unloading of the batch mixing device.

The continuous mixer is able to substantially mix the ingredients of an elastomeric composition, especially under cold-feeding/dosing conditions, and to chew the elastomeric material, thereby raising the temperature thereof in order to make it workable and plastic to facilitate the incorporation and/or distribution of the ingredients within the polymeric matrix. The continuous mixer is therefore mainly provided with mixing portions able to impart a high shear stress to the composition, and with any redistribution portions. The continuous mixer is further provided with transport portions capable of carrying the composition being worked from one longitudinal end to the other one of the inner chamber. Examples of continuous mixing devices are continuous twin-screw or multi-screw (e.g. ring mixers), penetrating and co-rotating, or planetary mixing devices.

The term 'planetary mixer' means a continuous mixing device having a central rotor and a plurality of satellites mixers, each of which, driven by the central rotor, rotates simultaneously about its own axis and about the central rotor.

Both the batch mixer and the continuous mixer are able to impart sufficient energy to the elastomeric composition to mix and disperse the filler in the elastomeric polymer even in case of cold feeding, unlike other elastomeric composition handling devices, such as conveyor devices and devices for manufacturing a semi-finished product.

DESCRIPTION OF THE FIGURES

Figure 1 shows a radial half-section of a tyre for vehicle wheels, comprising at least one component formed by an elastomeric compound comprising the capsules according to the invention.

Figure 2 shows the IR spectrum (transmittance vs wavelength) of the TMPGE (epoxy) respectively alone and in simple mixture with EC, with the characteristic signal at 1475 cm$^{-1}$ of the unreacted epoxy groups of TMPGE highlighted.

Figure 3 shows the IR spectrum (transmittance vs wavelength) of the reaction mixture of TMPGE and EC before heating and after 20 and 72 hours at 90 °C.

Figure 4 shows a photograph of samples of cross-linked capsules according to the invention (Ex. 1B) and non-cross-linked comparative (Ex. 1C), before (left) and after (right) heating for 24 hours at 120 °C.

Figure 5 shows the diagram relating to the melting trend (melting degree of the sample: in ordinate, scale from 0 - no melting - to 10 - complete melting) of the TBBS as it is, of the TBBS encapsulated in non-cross-linked ethylcellulose (Ex. 1C, comparative) and of the TBBS encapsulated in cross-linked ethylcellulose according to the invention (Ex. 1B).

Figure 6 shows the trend of the torque S' measured in elastomeric compounds subjected to vulcanisation at 151 °C for 60 minutes, said compounds comprising respectively cross-linked TBBS capsules according to the invention (Ex. 4.1), non-cross-linked comparative TBBS capsules (Ex. 4.2) or a simple mixture of the TBBS/EC/TMPGE ingredients (Ex. 4.3 comparative).

Figure 7 shows the trend of the torque measured in elastomeric compounds subjected to vulcanisation at 151 °C for 60 minutes, said compounds comprising respectively cross-linked TBBS capsules according to the invention (Ex. 5.2 and 5.3) or a simple mixture of the TBBS/EC/TMPGE ingredients (Ex. 5.1 comparative).

Figure 8 shows the trend of the torque measured in elastomeric compounds of the invention (Ex. 6.3 and 6.4) subjected to vulcanisation at 151 °C for 60 minutes, said compounds prepared by dilution of concentrated masterbatches based on butadiene or styrene-butadiene (Ex. 6.1 and 6.2) comprising cross-linked TBBS capsules according to the invention (Ex. 1B).

DETAILED DESCRIPTION OF THE INVENTION

The capsule according to the invention, characterised by one or more of the following preferred aspects taken alone or in combination with each other, will be illustrated in detail below. The capsule of the invention is a rigid capsule for the rigidity of the cross-linked coating.

The capsule of the invention comprises a coating and a core.

The coating of the capsule of the invention comprises at least one cross-linked polymer.

The cross-linked polymer is obtained by cross-linking with cross-linking agents one or more cross-linkable polymers having reactive hydroxyl, thiol, carboxylic, anhydride or amino groups.

The cross-linkable polymers having reactive hydroxyl or amino groups are preferably selected from polysaccharides, in particular from the variously substituted cellulose derivatives, alkylates or acylates, such as for example ethyl cellulose, cellulose acetate, 2-hydroxyethyl cellulose, cellulose acetate butyrate, cellulose acetate phthalate, cyanoethylated cellulose, methylcellulose, hydroxypropyl cellulose, sodium carboxymethylcellulose, hydroxypropylmethyl cellulose, methyl 2-hydroxyethyl cellulose, starches and derivatives such as hydroxyethylated starch, amylose, chitosans, alginates such as sodium alginate, polyesters such as polylactic acid, poly(lactic-co-glycolic) acid (PLGA), melamine-formaldehyde resins, phenol-formaldehyde resins and urea-formaldehyde resins, NR, NBR or EPDM rubbers derivatised (grafted) with anhydrides, preferably with maleic anhydride.

Preferred cross-linkable polymers are cross-linkable, environmentally friendly and safe cellulose derivatives.

Preferably, the cross-linkable polymers are polysaccharides with a molecular weight of from 100000 to 500000 Daltons. Preferably, the cross-linkable polymers are polysaccharides with a molecular weight of from 100000 to 500000 Daltons selected from ethylcellulose, hydroxyethylcellulose, hydroxypropylcellulose, and carboxymethylcellulose.

Commercial examples of cross-linkable polymers are the Sigma-Aldrich ethylcellulose (viscosity 300 cP measured at 5% in toluene/ethanol 80:20, 48% ethoxyls) and the cellulose acetate butyrate CAB-381 by EASTMAN.

Cross-linking agents suitable for cross-linking the aforementioned cross-linkable polymers are the products as defined in claim 1.

Preferably, the cross-linking agents are products having two or more reactive groups such as:

- epoxy groups, such as in bisphenol A diglycidyl ether, in trimethylolpropene triglycidyl ether (TMPGE), in epoxy resins having epoxy groups such as cycloaliphatic epoxy resins, glycidylamino epoxy resins, or as in cardanol glycidyl ether, in epoxy soybean oil and in epoxidised castor oil;

- carboxylic groups, as in C2-C12 dicarboxylic acids such as for example malonic acid, succinic acid and fumaric acid, optionally activated as acyl halides - as in the C2-C12 dicarboxylic acids dihalides, for example oxalyl dihalides, malonyl dihalides, succinyl dihalides, glutaryl dihalides, adipyl dihalides or phthalyl dihalides - or such as esters, for example dimethyl esters of C2-C12 carboxylic acid such as dimethyl oxalate, higher homologues and the like;
- aldehyde groups, such as in glyoxal, succinaldehyde, adipaldehyde and glutaraldehyde,
- isocyanate groups, such as in toluene diisocyanate, methylene diphenyl diisocyanate and hexamethylene diisocyanate (HDI),
- hydroxyl groups such as for example 1,4 butanediol or 1,6 hexanediol,
- halogens as in C1-C6 dialoalkanes, such as dialo-methylene, -ethylene, - ethylidene, -trimethylene, -tetramethylene, -pentamethylene and -hexamethylene. The preferred halides are bromides or, in particular, chlorides.

Other suitable cross-linking agents are the compounds of formula:

$$Q(OR)_4 \qquad (I)$$

where Q is Sn, Si, Pb, Ge, Ti or, Zr, and R is C1-C4 alkyl.

Q is preferably Si, Ti or Zr. R is, for example, methyl, ethyl, n-propyl, isopropyl, n-butyl, sec-butyl or tert-butyl, and is preferably ethyl, n-propyl, isopropyl or n-butyl.

The inorganic compounds of Zr, Ti and Sn such as $ZrOCl_2$, $TiOSO_4$ and $SnCl_4$ may also be used as cross-linking agents.

Further suitable cross-linking agents are boron compounds such as boric acid and salts thereof, preferably alkali metal salts of polyboric acids, for example sodium and potassium tetraborate, as well as aluminium compounds of formulas:

$$Al(NO_3)_3, Al_2(SO_4)_3 \text{ or } M\,Al(SO_4)_2 \qquad (II)$$

wherein M is potassium or sodium.

Boric acid, sodium tetraborate, aluminium nitrate and aluminium sulphate are preferred.

Commercial example of a suitable cross-linking agent is the trimethylolpropene triglycidyl ether of Sigma-Aldrich.

The cross-linked polymer of the capsule coating according to the invention is preferably characterised by a cross-linking degree which can involve about 5% to 50% of said reactive groups of the cross-linkable polymer, preferably about 10% to 20%.

The limiting agent in the cross-linking reaction is usually the cross-linking agent. In the case of cross-linking agent with epoxy groups, the cross-linking trend and the disappearance of the cross-linking agent can be followed by observing the epoxy signals in the IR analysis.

The cross-linked polymer of the capsule coating according to the invention is preferably characterised by a softening start temperature generally higher than 110 °C, preferably higher than 120 °C, more preferably higher than 130 °C, even more preferably higher than 140 °C.

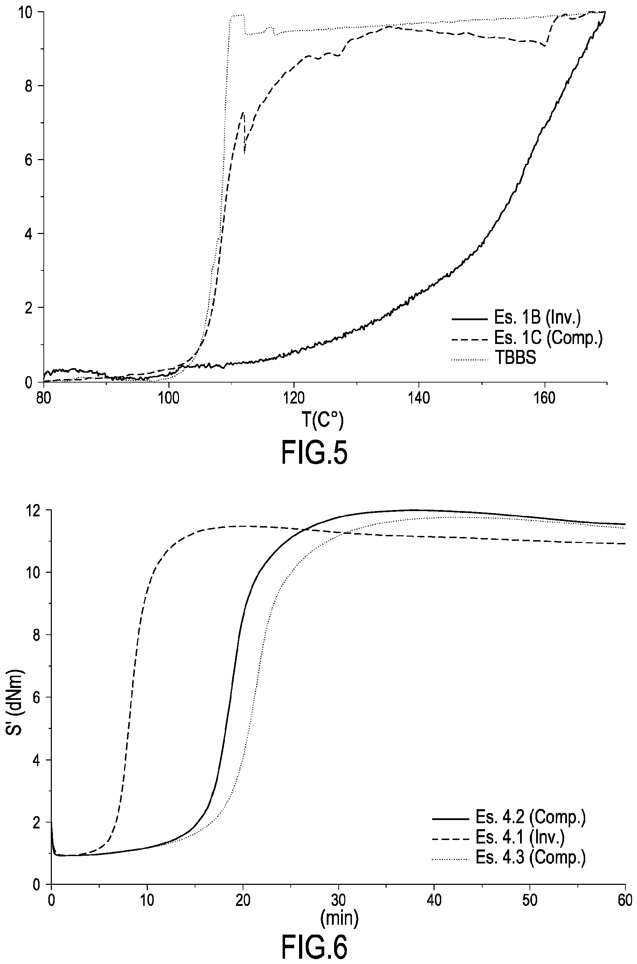

The DSC plot of the cross-linked capsules of the invention does not show the sharp endothermic peak typical of non-cross-linked polymers. On the contrary, the plot shows only a little intense and widened peak, consistently with the thermal behaviour of the cross-linked polymers which show no sharp first order transitions. As can be seen in Fig. 5, as heating proceeds and following the melting of the encapsulated compound, the capsule of the invention (Ex. 1B) undergoes a slow process of disintegration, which is associated with the gradual release of the additive (A).

The capsule of the invention comprises a core comprising at least one additive for tyre compounds (A).

The additive for tyre compounds (A) encapsulated herein can be selected from vulcanising agents, vulcanisation additives - such as activating agents, accelerants and retardants -, compatibilisation agents, waxes, plasticising agents, antioxidant agents (or anti-ageing agents), antiozone agents, resins, liquid polymers, mixtures thereof and the like.

The encapsulated additive for tyre compounds may be at least one vulcanising agent.

The vulcanising agent (D) is preferably selected from sulphur, or alternatively, sulphur-containing molecules (sulphur donors), such as for example caprolactam disulphide (CLD), bis(trialcoxysilyl)propyl]polysulphides, dithiophosphates, phosphorylpolysulphide (SDT) and mixtures thereof.

Preferably, the vulcanising agent (D) is sulphur, preferably selected from soluble sulphur (crystalline sulphur), insoluble sulphur (polymeric sulphur), (iii) oil-dispersed sulphur and mixtures thereof.

Commercial examples of vulcanising agents (D) suitable for use in the elastomeric composition for tyres of the invention are 67% sulphur known by the commercial name of Crystex OT33 from Eastman and Rhenogran CLD 80 from Lanxess.

The encapsulated additive for tyre compounds may be at least one vulcanisation activating agent

The vulcanisation activating agents suitable for use in the present elastomeric composition are zinc compounds, in particular ZnO, ZnCOs, zinc salts of saturated or unsaturated fatty acids containing from 8 to 18 carbon atoms, such as, for example, zinc stearate, which are preferably formed in situ in the elastomeric composition by reaction of ZnO and of the fatty acid, as well as $Bi_2O_3$, PbO, $Pb_3O_4$, $PbO_2$, or mixtures thereof.

Preferred activating agents derive from the reaction of zinc oxide and stearic acid.

The encapsulated additive for tyre compounds may be at least a vulcanisation accelerant agent.

The vulcanisation accelerant is generally selected from xanthates, dithiocarbamates, thiurams, thiazole derivatives, sulphenamides, guanidines and thiourea derivatives, preferably from sulphenamides.

Preferably, the vulcanisation accelerant is selected from tetramethylthiouram monosulphide (TMTM), tetramethylthiuram disulphide, benzothiazyl-2-sulphene morpholide (MBS), benzothiazyl-2-cyclohexyl-sulphenamide (CBS), benzothiazyl-2-tert.-butyl-butyl (TBBS), benzothiazildicyclohexyl sulphenamide (DCBS), diphenyl guanidine (DPG), diortotolyl guanidine (DOTG), o-tolylbiguanide (OTBG), zinc-N-dimethyl-dithiocarbamate (ZDMC), zinc-N-diethyl-dithiocarbamate (ZDEC), zinc--N-dibutyl-dithiocarbamate (ZDBC), zinc-N-ethylphenyldithiocarbamate (ZEBC), zinc-N-pentamethylene dithiocarbamate (ZPMC), ethylentiourea (ETU), diethylthiourea (DETU), diphenylthiourea (DPTU), 2-mercaptobenzothiazole (MBT), 4-aminodiphenylamine (4-ADPA) and mixtures thereof.

The vulcanisation accelerant is generally characterised by a melting point, typically associated with at least partial decomposition, lower than 140 °C, typically lower than 120 °C or 110 °C. For example, TBBS melts at about 104 °C, CBS at about 97-105 °C and tetramethylthiouram disulphide at about 107 °C.

The encapsulated additive for tyre compounds may be at least a vulcanisation retardant agent.

The vulcanisation retardant agent suitable for use in the present elastomeric composition for tyres is preferably selected from urea, phthalic anhydride, N-nitrosodiphenylamine N-cyclohexylthiophthalimide (CTP or PVI) and mixtures thereof.

A commercial example of a suitable retardant agent is N-cyclohexylthiophthalimide VULKALENT G of Lanxess.

In one embodiment, the capsule according to the present invention incorporates the entire vulcanisation package, comprising at least one vulcanising agent, one activating agent, one accelerant and one retardant.

The encapsulated additive for tyre compounds may be at least one compatibilising agent.

The term "compatibilising agent" means a product capable of interacting with the reinforcing filler, in particular with silica, and binding it to the diene elastomeric polymer during vulcanisation.

Preferably, the at least one compatibilising agent is a silane selected from those having at least one hydrolysable group, which can be identified, for example, by the following general formula (III):

$$(R)_3Si-C_nH_{2n}-X \qquad (III)$$

where the R groups, which may be the same or different, are selected from alkyl, alkoxy or aryloxy groups or from halogen atoms, provided that at least one of the R groups is an alkoxy or aryloxy group or a halogen; n is an integer of from 1 to 6, inclusive; X is a group selected from: nitrous, mercapto, amino, epoxide, vinyl, imide, chlorine, $-(S)_mC_nH_{2n}-Si-R_3$ and -S-COR, where m and n are integers of from 1 to 6 inclusive and the R groups are as defined above, and mixtures thereof.

Preferred compatibilising agents are bis(3-triethoxysilylpropyl)tetrasulphide (TESPT) and bis(3-triethoxyisilylpropyl)disulphide (TESPD).

Commercial examples of compatibilising agents suitable for use in the present elastomeric composition are bis(3-triethoxysylpropyl)tetrasulphide Si69 marketed by Evonik and Silane NXT from Momentive.

The encapsulated additive for tyre compounds may be at least one wax.

The wax may be for example a petroleum wax or a mixture of paraffins.

Commercial examples of suitable waxes are the Repsol N-paraffin mixture and the Antilux® 654 microcrystalline wax from Rhein Chemie.

The encapsulated additive for tyre compounds may be at least one plasticising agent.

The at least one plasticising agent is generally selected from mineral oils, vegetable oils, synthetic oils, polymers with a low molecular weight and mixtures thereof, such as, for example, aromatic oil, naphthenic oil, phthalates, soybean oil and mixtures thereof.

The encapsulated additive for tyre compounds may be at least one antioxidant or antiozone agent.

The at least one antioxidant or antiozone agent is preferably selected from N-isopropyl-N'-phenyl-p-phenylenediamine (IPPD), N-(-1,3-dimethyl-butyl)-N'-phenyl-p-phenylenediamine (6PPD), N,N'-bis-(1,4-dimethyl-pentyl)-p-phenylenediamine (77PD), N,N'-bis-(1-ethyl-3-methyl-pentyl)-p-phenylenediamine (DOPD), N,N'-bis-(1,4-dimethyl-pentyl)-p-phenylenediamine, N,N'-diphenyl-p-phenylenediamine (DPPD), N,N'-ditolyl-p-phenylenediamine (DTPD), N,N'-di-beta-naphthyl-p-phenylenediamine (DNPD), N,N'-bis(1-methylheptyl)-p-phenylenediamine, N,N'-Di-sec-butyl-p-phenylenediamine (44PD), N-phenyl-N'-cyclohexyl-p-phenylenediamine, N-phenyl-N'-1-methylheptyl-p-phenylenediamine and the like and mixtures thereof, preferably it is N-1,3-dimethylbutyl-N'-phenyl-p-phenylenediamine (6-PPD).

A commercial example of a suitable antioxidant agent is 6PPD from Solutia/Eastman or Santo flex produced by Flexsys.

The encapsulated additive for tyre compounds may be at least one resin.

The term "resin" is used to mean a polymer having thermoplastic or at least partially thermoplastic characteristics (as in the case of elastomeric/thermoplastic block copolymers).

Thermoplastic characteristics is used to indicate the tendency of the polymer to increase its viscosity, that is, to deform plastically when subjected to a temperature increase and/or to a sufficiently strong deformation. These characteristics of thermoplasticity differentiate the behaviour of a resin from that of an elastomer.

The at least one resin is a non-cross-linkable polymer (non-reactive resin) preferably selected from the group comprising hydrocarbon resins, phenolic resins, natural resins and mixtures thereof.

Examples of commercially available resins are NOVARES C resins, produced by RUTGERS CHEMICAL GmbH, UNILENE A 100, produced by Braskem, and Novares TL 90, produced by Ruetgers, Sylvares SA 85, produced by Arzona Chemical, Kristalex F 85, produced by Eastman, Escorez® 1102 (produced by ExxonMobil), Piccotac 1100 (produced by Eastman), Quintone A 100 (produced by Zeon Chemicals), RESINA SP-1068 (produced by SI GROUP Inc.), DUREZ 32333 (produced by Sumitomo Bakelite), KORESIN (produced by BASF Company), SYLVARES TP 115 (produced by Arizona Chemicals), Piccolyte F90 and Piccolyte F105, produced by PINOVA; Dercolyte A 115 and Dercolyte M 115, produced by DRT.

The encapsulated additive for tyre compounds may be at least one liquid polymer. The term "liquid polymer" means a diene polymer derived from the polymerisation of one or more monomers, among which at least one is a conjugated diene, said polymer at the temperature of 23 °C being a pourable liquid or a low viscosity fluid. Preferably, the liquid polymer is characterised by one or more of the following parameters:

a weight average molecular weight ( $\overline{M_w}$ ) not higher than 80000 g/mol, and/or
a glass transition temperature (Tg) lower than 0 °C.

The weight average molecular weight ( $\overline{M_w}$ ) may be measured according to known techniques in the field such as for example by GPC (Gel Permeation Chromatography) according to the ISO 13885 method.

The glass transition temperature Tg can be conveniently measured by using a differential scanning calorimeter (DSC) according to methods well known to those skilled in the art (ISO 22768 "Rubber, Raw - Determination of the glass transition temperatures by differential scanning calorimetry (DSC)".

Preferably, the one or more liquid polymers are selected from among liquid polymers and copolymers based on alkylene, preferably based on butadiene (BR), isoprene (IR), isoprene/butadiene (IBR), styrene/butadiene (SBR), optionally hydroxy and epoxy functionalised, or from among depolymerized liquid natural polymers (NR).

Examples of suitable liquid polymers are:

- liquid polymers based on styrene - butadiene (SBR) marketed by Cray Valley under the trade name RICON 100, 181 RICON, RICON 184;
- liquid polymers based on butadiene (BR) marketed by Evonik under the trade name POLYVEST 110, POLYVEST 130, POLYVEST MA 75; marketed by Kuraray under the trade name LBR 307, LBR 305, LBR 300; and marketed by Cray Valley under the trade name RICON 130, RICON 130 MA8, RICON 130 MA 13, RICON 150, RICON 156, RICON 157;
- liquid polymers based on isoprene (IR) marketed by Kuraray under the trade name LIR 30, LIR 50, LIR 403, LIR 410, among natural polyisoprenes: DPR 35, DPR 40, DPR75, DPR 400 of DPR INDUSTRIES.

The coating of the present capsules, thanks to the cross-linking, keeps the structure of the capsule intact longer, allowing a better distribution in the elastomeric mass of the additive (A) encapsulated therein.

The capsule according to the invention comprises at least 10%, preferably at least 20%, more preferably at least 30%, even more preferably at least 40%, even more preferably at least 50% by weight with respect to the overall weight of the capsule, of the at least one additive for tyre compounds (A).

Preferably, the capsule according to the invention comprises 10% to 80% by weight of the at least one additive for tyre compounds (A) and 90% to 20% by weight of the cross-linked coating, with respect to the overall weight of the capsule.

Optionally, the capsule of the invention may comprise surfactant, for example from 0 to 5% by weight with respect to the total weight of the capsule.

Preferably, the capsule according to the invention consists of 10% to 80% by weight of the at least one additive for tyre compounds (A), 90% to 20% by weight of the coating and optionally 0 to 5% by weight of surfactant, with respect to the total weight of the capsule.

In case of multiple additives (A) in mixture, the above preferences apply to their total quantity.

The capsule of the invention can generally have a capsule or spheroidal shape.

Given the possible irregular shape of the capsules, to characterise their size reference is made to an average diameter, which corresponds to the size of the opening of the sieve links through which the capsules pass, being held by the immediately lower sieve.

The capsule of the invention has an average diameter of less than 200 microns, preferably less than 100 microns, more preferably less than 50 microns.

A further aspect of the present invention is an emulsion process for the preparation of the capsules of the invention described above.

The present preparation process is characterised by one or more of the present features taken individually or in combination.

The present process provides a solution (organic phase) of at least one cross-linkable polymer and at least one additive for tyre compounds (A) in a suitable organic solvent, immiscible with water.

Ideally, the organic solvent should be able to dissolve both the cross-linkable polymer and the at least one additive for tyre compounds (A), be immiscible with water and sufficiently low-boiling to be completely evaporated at the end and not be trapped in the capsules.

The term "sufficiently low-boiling" indicates a boiling point of the organic solvent preferably lower than 120°C, more preferably lower than 100 °C, even more preferably lower than 80°C at room pressure.

Suitable organic solvents usable in the present process of preparing the capsules of the invention are for example chlorinated solvents, such as dichloromethane, chloroform, carbon tetrachloride, dichloroethane and the like, aromatic solvents such as toluene, xylenes and the like, halogenated aromatics such as chlorine benzene, dichlorobenzene and the like, aliphatic hydrocarbons such as hexane, cyclohexane and the like, esters such as ethyl acetate, methyl acetate, isopropyl acetate and the like, the ethers such as diethyl ether, diisopropyl ether, tetrahydrofuran, dioxane and the like, and mixtures thereof.

A particularly preferred solvent is ethyl acetate.

Generally, the solvent is used, depending on the solubility of the materials, in a weight ratio from 50:1 to 0.5:1, preferably from 20:1 to 0.7:1, more preferably from 10:1 to 1:1, even more preferably from 5:1 to 1:1, with respect to the overall weight of the at least one additive for tyre compounds (A) and of the cross-linkable polymer. To favour the complete dissolution of the cross-linkable polymer and the additive (A), various mixing techniques can be used, such as for example magnetic, mechanical stirrers or the like.

In the organic phase of the present process, the cross-linkable polymer and additive (A) are generally present in a weight ratio comprised between 10:1 and 0.1:1, preferably between 7:1 and 0.3:1, more preferably between 5:1 and 0.5:1, even more preferably around 1:1.

In a variant of the present process, the cross-linking agent may also be added to the organic phase, in the ratios and quantities specified below.

In the present emulsion process, at least one surfactant is added to improve the yield and efficiency of the encapsulation.

The surfactant can be selected from non-ionic surfactants, preferably from polyvinyl alcohols (PVA), ethoxylated sorbitan derivatives (Tweens™), sorbitan esters (Spans™), polyethoxylated castor oils (Kolliphor™), alkylpolyethylene glycol (Triton™), polyoxyethylene ethers (Brij™) and mixtures thereof, more preferably the surfactant is PVA.

Preferably, the HLB of the surfactant or of the surfactant mixture is between 10 and 20.

Preferably, the surfactant is added in a percentage by weight comprised between 0.2% and 10% by weight, preferably between 0.5% and 5% by weight, more preferably between 0.8% and 2% by weight with respect to the weight of water.

The surfactant is preferably added dissolved in water to give an aqueous phase.

Alternatively, the surfactant may be added to the organic phase before the addition of the aqueous phase.

In another variant, the surfactant is subsequently added to the mixture of the organic phase and aqueous phase.

In a variant, the aqueous phase comprising the surfactant is added to the solution of the cross-linkable polymer and of the additive (A) (organic phase) and only then is the cross-linking agent added.

In another variant, the organic phase comprising the cross-linkable polymer, the additive (A) and the cross-linking agent is added to the aqueous phase comprising the surfactant.

Preferably, the weight ratio between water and organic solvent immiscible with water is comprised between 10:1 and 0.1:1, more preferably between 5:1 and 0.5:1, even more preferably between 4:1 and 2:1.

To favour the formation of the emulsion, various mixing techniques can be used, preferably by homogenisation, for example with Ultra Turrax homogenisers. During homogenisation, to avoid the evaporation of the solvent, it is possible to suitably cool the solution, for example to a temperature from 0 to 20 °C, preferably from 0 to 10 °C.

In a variant of the present process, the at least one cross-linking agent is added to the emulsion comprising the cross-linkable polymer, the additive (A) and the surfactant.

The cross-linking agent may be added as it is or, alternatively, dissolved in a suitable organic solvent, preferably selected from the organic solvents of the organic phase mentioned above.

In the present process, the cross-linking agent is preferably used in a percentage by weight comprised between 1% and 15%, preferably between 5% and 15%, more preferably between 8% and 12%, even more preferably around 10% by weight with respect to the cross-linkable polymer.

In a preferred embodiment of the present process, the cross-linkable polymer is a cross-linkable cellulose derivative and the cross-linking agent is a di- or triepoxide. In a more preferred embodiment of the present process, the cross-linkable polymer is ethylcellulose and the cross-linking agent is TMPGE.

The cross-linking agent is preferably added to the reaction mixture slowly.

In the present process, in the reaction emulsion comprising the cross-linkable polymer, the additive (A), the cross-linking agent and the surfactant, capsules may already be formed but not cross-linked.

Typically with the addition of the cross-linker, an increase in the viscosity of the reaction mixture is observed caused by a beginning of cross-linking of the cross-linkable polymer already at room temperature.

The present process preferably comprises at least one heating step for cross-linking to take place.

By suitably varying the temperature and duration of the heating, it is possible to modulate the cross-linking and obtain coatings with different degrees of cross-linking.

The heating step is preferably carried out on the non-cross-linked capsules isolated from it.

The term "non-cross-linked capsules" is intended herein to indicate the capsules in which cross-linking may have occurred partially but in negligible amounts, involving for example 5% or less of the cross-linkable reactive groups of the cross-linkable polymer.

The heating step is preferably carried out on the non-cross-linked capsules isolated from the reaction mixture, preferably in an oven, at a temperature of between 70 and 150 °C, preferably between 80 and 130 °C, for a period of 5 to 20 hours, preferably 8 to 15 hours.

The non-cross-linked capsules can be isolated from the reaction mixture, for example by evaporation of the organic solvent and subsequent centrifugation of the aqueous phase.

Preferably after cross-linking, the cross-linkable polymer maintains at least 20%, more preferably at least 30%, even more preferably at least 50% of the cross-linkable reactive groups free.

Preferably, after cross-linking, the cross-linkable cellulose derivatives maintain at least 20%, more preferably at least 30%, even more preferably at least 50% of the cross-linkable hydroxyl groups free.

The Applicant has observed that continuing further in the cross-linking, the viscosity of the organic phase increases significantly, making processing more difficult.

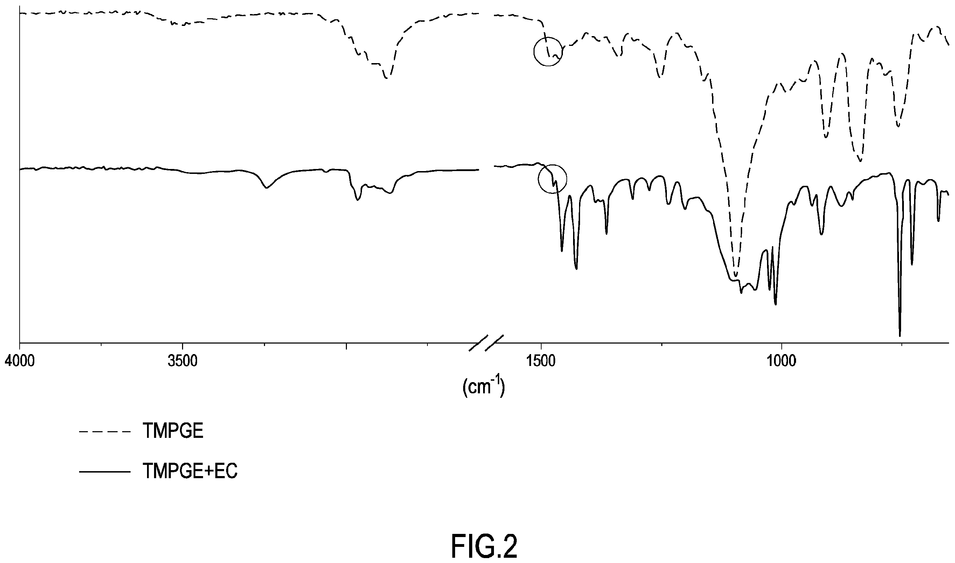

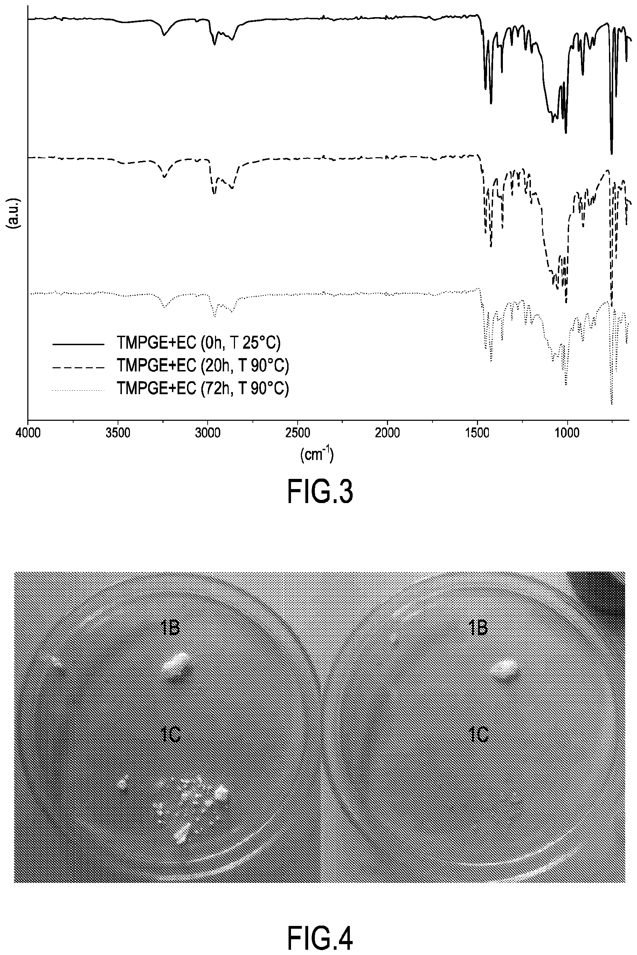

The cross-linking reaction may be followed by IR spectroscopy, as shown in Fig. 2 and 3.

A preferred process for preparing the capsules comprises:

- providing a solution of at least one cross-linkable cellulose derivative and at least one additive for tyre compounds (A), in at least one suitable organic solvent immiscible with water,
- providing an aqueous phase comprising at least one non-ionic surfactant,
- mixing said organic phase and said aqueous phase together to provide an emulsion,
- adding to the emulsion at least one cross-linking agent comprising at least two epoxy groups,
- allowing the emulsion to react, preferably under stirring, in order to produce the non-cross-linked capsules,
- isolating the non-cross-linked capsules from the emulsion, and
- subjecting the capsules to cross-linking at a temperature of between 70 and 150 °C, and for a period of 5 to 20 hours, thus obtaining the cross-linked capsules, wherein

  the cross-linkable cellulose derivative and the at least one additive (A) are used in a weight ratio between 10:1 and 0.1:1,
  the cross-linking agent is used in a percentage by weight between 1% and 20%, by weight with respect to the cross-linkable cellulose derivative, and
  the weight ratio between water and water-immiscible organic solvent is between 10:1 and 0.1:1.

A more preferred process for preparing the capsules comprises:

- providing a solution of at least one cross-linkable cellulose derivative and at least one additive for tyre compounds (A) selected from vulcanising agents, vulcanisation additives such as activating agents, accelerants and retardants, compatibilising agents, waxes, plasticising agents, antioxidant agents, antiozone agents, resins, liquid polymers, and mixtures thereof in at least one suitable organic solvent immiscible with water,
- providing an aqueous phase comprising at least one non-ionic surfactant,
- mixing said organic phase and said aqueous phase together to provide an emulsion,
- adding to the emulsion at least one cross-linking agent comprising at least two epoxy groups,

- allowing the emulsion to react, preferably under stirring, in order to produce the non-cross-linked capsules,
- isolating the non-cross-linked capsules from the emulsion,
- subjecting the capsules to cross-linking at a temperature of between 70 and 150 °C, and for a period of 5 to 20 hours, thus obtaining the cross-linked capsules, wherein

the cross-linkable cellulose derivative and the additive (A) are used in a weight ratio between 5:1 and 0.5:1, the cross-linking agent is used in a percentage by weight between 8% and 12%, by weight with respect to the cross-linkable cellulose derivative, and the weight ratio between water and water-immiscible organic solvent is between 4:1 and 2:1.

A further aspect of the present invention is a capsule obtainable according to the process described above, having one or more of the above features taken alone or in combination.

A further aspect of the invention is an elastomeric composition for tyres comprising the capsule according to the invention.

The elastomeric composition for tyres according to the present invention is characterised by one or more of the following preferred aspects taken alone or in combination with one another.

The elastomeric composition for tyres according to the invention comprises overall less than 50 phr, preferably less than 30 phr, more preferably less than 20 phr of one or more additives (A) encapsulated in capsules according to the invention.

In the elastomeric composition each single additive (A) can be present, in an encapsulated form, preferably in an amount lower than 30 phr, more preferably lower than 20 phr, even more preferably lower than 10 phr.

Preferably, the overall amount of the encapsulated additives (A) is less than 50 phr, more preferably less than 30 phr, even more preferably less than 20 phr.

The preferred aspects of the capsule according to the invention described above apply equally to the capsules comprised in the present elastomeric composition.

The present elastomeric composition preferably comprises from 0.1 to 20 phr, preferably from 1 to 10 phr of capsules according to the invention.

The elastomeric composition for tyres according to the invention comprises at least 100 phr of at least one diene elastomeric polymer (B).

The diene elastomeric polymer (B) used in the present process may be selected from those commonly used in sulphur-vulcanisable elastomeric compositions, which are particularly suitable for producing tyres, i.e. from among elastomeric polymers or copolymers with an unsaturated chain having a glass transition temperature (Tg) generally lower than 20 °C, preferably in the range from 0 °C to -110 °C.

The diene elastomeric polymer may have a weight average molecular weight (Mw) higher than 80000 g/mol.

Optionally, the diene elastomeric polymer may also comprise diene polymers with a lower molecular weight, for example liquid polymers such as LIR50 with an average molecular weight of around 50000 g/mol.

These polymers or copolymers may be of natural origin or may be obtained by solution polymerization, emulsion polymerization or gas-phase polymerization of one or more conjugated diolefins, optionally mixed with at least one comonomer selected from monovinylarenes and/or polar comonomers in an amount not exceeding 60% by weight.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene and mixtures thereof.

1,3-butadiene and isoprene are particularly preferred.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, $\alpha$-methylstyrene, 3-methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, and mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile and mixtures thereof.

Preferably, the diene elastomeric polymer (B) which can be used in the present invention can be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof.

The present elastomeric composition may possibly comprise an elastomeric polymer of one or more monoolefins with an olefinic comonomer or derivatives thereof (A'). The monoolefins can be selected from: ethylene and $\alpha$-olefins

generally containing from 3 to 12 carbon atoms, such as for example propylene, 1-butene, 1-pentene, 1-hexene, 1-octene and mixtures thereof. The following are preferred: copolymers selected from ethylene and an α-olefin, optionally with a diene; isobutene homopolymers or copolymers thereof with small amounts of a diene, which are optionally at least partially halogenated. The diene possibly present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene and mixtures thereof. Among them, the following are particularly preferred: ethylene/propylene (EPR) copolymers or ethylene/propylene/diene (EPDM) copolymers; polyisobutene; butyl rubber; halobutyl rubbers, in particular chlorobutyl or bromobutyl rubbers; or mixtures thereof.

A diene elastomeric polymer (B) or an elastomeric polymer (B') functionalised by reaction with suitable terminating agents or coupling agents may also be used. In particular, the diene elastomeric polymers obtained by anionic polymerization in the presence of an organometallic initiator (in particular, an organolithium initiator) may be functionalised by reacting the residual organometallic groups derived from the initiator with suitable terminating agents or coupling agents such as, for example, imines, carbodiimides, alkyltin halides, substituted benzophenones, alkoxysilanes or aryloxysilanes.

In the present description, the term at least one elastomeric polymer (B) means that one or more diene elastomeric polymers (B) as defined above may be present in a mixture.

In the present composition, the quantity of the at least one elastomeric polymer (B) or the mixture of two or more elastomeric polymers (B) as defined above amounts to a total of 100 phr.

Commercial examples of the diene elastomeric polymer (B) are the BUNA CB 25 butadiene from ARLANXEO or the styrene-butadiene EUROPRENE 1500 from Versalis.

The elastomeric composition for tyres according to the invention preferably comprises at least 0.1 phr of at least one reinforcing filler (C).

The elastomeric composition for tyres according to the invention preferably comprises from 3 phr to 90 phr, more preferably from 20 to 80 phr of at least one reinforcing filler (C).

The elastomeric composition for tyres according to the invention preferably comprises at least one reinforcing filler (C) selected from carbon black, conventional silica, such as sand silica precipitated with strong acids, preferably amorphous, diatomaceous earth, calcium carbonate, titanium dioxide, talc, alumina, aluminosilicates, kaolin, silicate fibres and mixtures thereof.

Preferably, the reinforcing filler (C) is selected from carbon black, conventional silica, silicate fibres and mixtures thereof.

The elastomeric composition for tyres of the invention may optionally comprise one or more reinforcing fillers (C) as defined above in a mixture.

Commercial examples of reinforcing fillers (C) suitable for use in the present elastomeric composition are the carbon black N326 and N375 from Cabot, the carbon black N326 and N375 from Birla.

Commercial Examples of silicas and silicates usable are Zeosil 1165 MP, Zeosil 1115 MP, Zeosil 1200 MP, Zeosil 1085GR, Zeosil 115 GR, Zeosil 165 GR, Zeosil 195 GR by Solvay, Newsil HD 115 MP, Newsil HD 165 MP, Newsil HD 200 MP by Quechen, Ultrasil 5000 GR, Ultrasil 6000 GR, Ultrasil 7000 GR, Ultrasil 9000 GR, Ultrasil VN2 GR, Ultrasil VN3, Ultrasil VN3 GR, Aerosil 150, Aerosil 200 by Evonik, Perkasil GT 3000, Perkasil KS 300, Perkasil KS 408 by Grace, Zeopol 8745 by Huber, Ebrosil H180, Ebrosil GR and Ebrosil S-125 by IQESIL, Celtix by World Minerals, Pangel S9, Pangel B5 and Pansil 100 by Tolsa, Dellite HPS by Laviosa, Laponite RD by Rockwood.

The elastomeric composition for tyres according to the invention comprises at least one vulcanising agent (D) as described above.

Preferably, the vulcanising agent (D) is, in whole or in part, encapsulated in the capsules of the invention.

Alternatively, the vulcanising agent (D) may be present in whole or in part in free form (not encapsulated).

The vulcanising agent (D) may be present in the elastomeric composition of the invention in an overall quantity (encapsulated and not) generally of from 0.1 to 15 phr, preferably from 0.5 to 12 phr, even more preferably from 1 to 10 phr.

The present elastomeric composition may possibly comprise one or more vulcanising agents (D) as defined above in a mixture, preferably encapsulated according to the invention.

The elastomeric composition for tyres according to the invention may optionally comprise at least one compatibilising agent as defined above.

If present, the compatibilising agent is included in the elastomeric composition for tyres of the invention in a total quantity from 0.1 phr to 20 phr, preferably from 0.5 phr to 10 phr.

Preferably, the compatibilising agent if present in the elastomeric composition is encapsulated according to the invention.

The present elastomeric composition may possibly comprise one or more compatibilising agents as defined above in a mixture.

The elastomeric composition for tyres according to the invention may optionally comprise at least one antioxidant agent as defined above.

The antioxidant agent may be present in the elastomeric composition in an overall amount generally from 0 phr to 20 phr, preferably from 0.5 phr to 10 phr.

Preferably, the antioxidant agent if present in the elastomeric composition is in an encapsulated form according to the invention.

The elastomeric composition for tyres according to the invention may optionally comprise at least one wax as defined above.

The wax may be present in the elastomeric composition of the invention in an overall amount generally from 0.1 phr to 20 phr, preferably from 0.5 phr to 5 phr.

Preferably the wax, if present in the elastomeric composition, is in an encapsulated form according to the invention.

The elastomeric composition for tyres according to the invention may optionally comprise one or more further vulcanisation additives, such as activating agents and retardants.

The elastomeric composition for tyres according to the invention may optionally comprise at least one vulcanisation activating agent as defined above.

Preferably, the vulcanisation activating agents are present in the elastomeric composition for tyres of the invention in amounts from 0.2 to 15 phr, preferably from 0.5 to 10 phr.

Preferably the vulcanisation activating agent, if present in the elastomeric composition, is in an encapsulated form according to the invention.

The elastomeric composition for tyres according to the invention may optionally comprise at least one vulcanisation retardant agent as defined above.

The vulcanisation retardant agent may be present in the present elastomeric composition in an amount of generally from 0.05 phr to 2 phr.

The present elastomeric composition may comprise one or more vulcanisation retardant agents as defined above in a mixture.

Preferably, the retardant agent, if present in the elastomeric composition, is in an encapsulated form according to the invention.

The elastomeric composition for tyres according to the invention may comprise at least one vulcanisation accelerant agent as defined above.

The vulcanisation accelerant agent may be comprised in the present elastomeric composition for tyres in an overall amount generally from 0.05 phr to 10 phr, preferably from 0.1 phr to 5 phr.

Preferably, the accelerant agent, if present in the elastomeric composition, is in an encapsulated form according to the invention.

The present elastomeric composition may comprise one or more accelerant agents as defined above in a mixture.

The present elastomeric composition for tyres may possibly comprise other additives commonly used in the production of tyre products, selected on the basis of the specific application for which the composition is intended.

Preferably, if present, one or more of these additives are in whole or in part in an encapsulated form according to the invention.

In particular, in order to further improve the processability of the compound, at least one plasticising agent as defined above may be optionally added to the composition. The amount of plasticiser is preferably from 0.1 phr to 50 phr, preferably from 5 phr to 30 phr.

In a preferred embodiment, the elastomeric composition of the invention comprises at least

0.5 to 50 phr of at least one additive (A) encapsulated in capsules according to the invention,
100 phr of at least one diene elastomeric polymer (B),
0.1 to 120 phr of at least one reinforcing filler (C), and
optionally, 0.1 to 15 phr of at least one vulcanising agent (D), if not already incorporated in the aforesaid capsules, wherein said capsules have been obtained by cross-linking a cross-linkable derivative of cellulose with a cross-linking agent having at least two epoxy groups.

Preferably, the present elastomeric composition comprises at least one reinforcing filler and one or more diene elastomeric polymers selected from natural rubbers, butadiene, isoprene and styrene-butadiene.

A further aspect of the present invention is a vulcanisable elastomeric compound for tyres obtained by mixing and possibly heating the components of the elastomeric composition for tyres of the invention, or a vulcanised elastomeric compound obtained by vulcanisation thereof.

The present vulcanisable elastomeric compound comprises the capsules of the invention incorporating the additive (A), as defined above.

The presence of the capsules in the vulcanisable elastomeric compound of the invention may be detected, for example, by means of microscopic observation (SEM) of suitable sections of the material.

A further aspect of the present invention is a process for the preparation of a vulcanisable elastomeric compound for tyres, said process comprising one or more mixing steps in at least one suitable mixer of at least one additive for tyre compounds (A) encapsulated in capsules according to the invention, at least one diene elastomeric polymer (B), optionally at least one reinforcing filler (C) and optionally at least one vulcanising agent (D).

Preferably in the present preparation process, after the addition of said at least one additive for tyre compounds (A) encapsulated in capsules according to the invention, the temperature of the mixing compound does not exceed 140 °C, preferably does not exceed 120 °C.

In one embodiment, the present process comprises

- a mixing step (1) which comprises mixing and possibly heating to a mixing temperature between 120 °C and 160 °C, in at least one suitable mixer:
- at least one elastomeric polymer (B),
- at least one reinforcing filler (C), and

  optionally, at least one additive for tyre compounds (A), other than the vulcanising agent (D), encapsulated in capsules according to the invention, in this case maintaining the temperature below 140 °C, to yield a non-vulcanisable elastomeric compound (m1);

- a mixing step (2) which comprises incorporating in the non-vulcanisable elastomeric compound (m1): at least one vulcanising agent (D), preferably encapsulated in capsules according to the invention,
- optionally at least another additive for tyre compounds (A) encapsulated in capsules according to the invention, and mixing at a mixture temperature not higher than 120 °C, preferably not higher than 105 °C, to yield a vulcanisable elastomeric compound (m2), and
- a step of unloading (3) of the vulcanisable elastomeric compound (m2).

In a preferred embodiment of the present process, the at least one additive for tyre compounds (A) encapsulated in capsules according to the invention, is added in step (I) keeping the mixing temperature lower than 140 °C.

In this variant, the dispersion step of the capsules in the elastomeric mass is advantageously prolonged providing a better dispersion.

Alternatively, the at least one additive for tyre compounds (A) encapsulated in capsules according to the invention, is added in part or completely in step (II).

In an embodiment of the present process, the capsule according to the invention comprising the at least one additive for tyre compounds (A) is first incorporated in at least a first diene elastomeric polymer (B) providing a concentrated masterbatch and then diluted successively in the same or another at least one diene elastomeric polymer (B).

The mixing step (1) may comprise multiple intermediate processes during which one or more of the additives, preferably encapsulated according to the invention, are incorporated, followed by further processing. This step, which does not involve the addition of the vulcanising agent (D), is also referred to as the non-productive step. This step may comprise a "chewing step", that is an initial step during which the one or more diene elastomeric polymers (B) are mechanically processed, possibly hot, in order to form the elastomeric mass and make it more processable and homogeneous. In this step, the polymer is generally processed, possibly with plasticisers, lowering the viscosity thereof and increasing the exposed surface thereof, thus making it easier to incorporate additives, in particular fillers.

The processing of the components may be performed in one or more suitable mixers, for example in an open mixer of the "open-mill" type or an internal mixer of the type with tangential rotors (Banbury®) or with interpenetrating rotors (Intermix), or in continuous mixers of the Ko-Kneader™ type (Buss®) or of the twin-screw or multi-screw type.

The processing may be discontinuous, i.e. in batches, or continuous, with the simultaneous or, preferably, sequential addition of the components.

In the case of batch processes, the processing may be carried out in one or, preferably, in several stages, carried out in the same or in different mixers, at the end of which the compound is generally unloaded.

In the case of continuous processes, carried out for example in planetary, twin-screw, multi-screw or ring mixers, after the addition of the at least one additive for tyre compounds (A) encapsulated in capsules according to the invention, the temperature of the compound is kept lower than 140 °C, preferably lower than 120 °C.

Generally the processing of step (I) of the components can last a total of 2 to 15 minutes, at temperatures ranging from 70 to 160 °C, preferably from 130 to 160 °C.

However, in the case in which the at least one additive for tyre compounds (A) encapsulated in capsules according to the invention is added in step (I), the temperature of the compound is kept lower than 140 °C, preferably at 120 °C.

After one or more processing stages of step (I), the at least one vulcanising agent (D), preferably sulphur-based, preferably encapsulated is incorporated in the non-vulcanisable elastomeric compound thus prepared (A) encapsulated in capsules according to the invention, and optionally at least another additive for tyre compounds, if not already added in step (I), preferably vulcanisation accelerants and retardants, to yield the vulcanisable elastomeric compound (production step II). In the incorporation step (II), the temperature is generally kept lower than 140 °C and preferably lower than 120 °C, more preferably between 80 °C and 105 °C, in order to avoid any undesired pre-crosslinking phenomenon.

The vulcanisable elastomeric compound thus prepared is then typically used for the preparation of one or more components of a tyre, and can be vulcanised according to standard procedures.

The vulcanisation process of the present vulcanisable compound generally involves heating it to a temperature of at least 140 °C.

Typically the vulcanisation process is carried out in conventional moulds at a temperature of between 140 °C and 190 °C, preferably lower than 180 °C, more preferably lower than 175 °C.

Preferably, the vulcanisation process is carried out at a temperature of between 150 °C and 180 °C, more preferably between 150 °C and 160 °C.

A further aspect of the present invention is a component of a tyre comprising the vulcanisable compound of the invention (green component) or the vulcanised compound obtained by vulcanisation thereof (vulcanised component).

Preferably, the tyre component according to the invention consists of the vulcanisable compound according to the invention (green component) or of the vulcanised compound obtained by vulcanisation thereof (vulcanised component).

Preferably, the at least one tyre component according to the invention is selected from tread band, base-layer, anti-abrasive layer, sidewall, sidewall insert, mini-sidewall, under-liner, rubber layers, bead filler, flipper, chafer and sheet, more preferably it is selected from tread band, base-layer, under-liner, bead filler and sidewall insert.

A further aspect of the present invention is a tyre for vehicle wheels comprising at least one of the components indicated above.

Preferably, the tyre for vehicle wheels of the invention comprises at least one tyre component which consists of a vulcanisable elastomeric compound according to the invention (green component) or of a vulcanised elastomeric compound obtained by vulcanisation thereof.

In one embodiment, a tyre for vehicles according to the present invention comprises at least

- a carcass structure comprising at least a carcass ply having opposite lateral edges associated to respective bead structure;
- possibly a pair of sidewalls applied to the lateral surfaces of the carcass structure, respectively, in an axially outer position;
- possibly a belt structure applied in radially outer position with respect to the carcass structure;
- a tread band applied in a radially outer position to said carcass structure or, if present, a belt structure,
- possibly a layer of elastomeric material, referred to as base-layer, applied in a radially inner position with respect to said tread band,

wherein at least one component comprises, or preferably consists of, the elastomeric compound according to the invention.

An embodiment according to the present invention relates to a tyre for high performance vehicles (HP, SUV and UHP), wherein at least one component comprises, or preferably consists of, the elastomeric compound according to the invention.

An embodiment according to the present invention relates to a tyre for heavy vehicles in which at least one component, preferably selected from base-layer, sidewall and tread band, comprises, or preferably consists of, the elastomeric compound according to the invention.

The tyre according to the invention may be a tyre for two, three or four-wheeled vehicles.

The tyre according to the invention can be for summer or winter use or for all seasons.

In one embodiment, the tyre according to the invention is a tyre for bicycle wheels.

A tyre for bicycle wheels typically comprises a carcass structure turned around a pair of bead cores at the beads and a tread band arranged in a radially outer position with respect to the carcass structure.

The carcass structure is intended to withstand the inflation pressure and to support the weight of the bicycle and the cyclist. It comprises one or more carcass plies, each comprising a plurality of suitably oriented reinforcement cords. In the case of several carcass plies, they are inclined with respect to each other to form a crossed structure.

The bead cores have the task of ensuring that the tyre is anchored to the wheel rim. In the radially inner position of the carcass structure, an air chamber may be provided in which pressurised air is introduced.

The tyre according to the present invention can be produced according to a process which comprises:

17

- building components of a green tyre on at least one forming drum;
- shaping, moulding and vulcanising the tyre;

wherein building at least one of the components of a green tyre comprises:

- manufacturing at least one green component comprising, or preferably consisting of, the vulcanisable elastomeric compound of the invention.

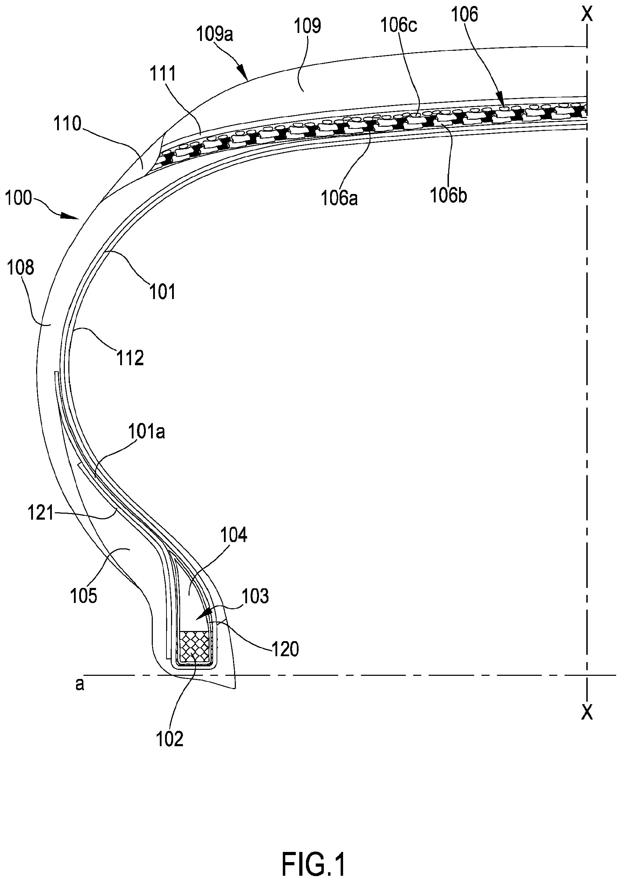

A tyre for vehicle wheels according to the invention, comprising at least one component comprising the present elastomeric compound, is illustrated in radial half-section in Figure 1.

In Figure 1, "a" indicates an axial direction and "X" indicates a radial direction, in particular X-X indicates the outline of the equatorial plane. For simplicity, Figure 1 shows only a portion of the tyre, the remaining portion not shown being identical and arranged symmetrically with respect to the equatorial plane "X-X".

Tyre 100 for four-wheeled vehicles comprises at least one carcass structure, comprising at least one carcass layer 101 having respectively opposite end flaps engaged with respective annular anchoring structures 102, referred to as bead cores, possibly associated to a bead filler 104.

The tyre area comprising the bead core 102 and the filler 104 forms a bead structure 103 intended for anchoring the tyre onto a corresponding mounting rim, not shown. The carcass structure is usually of radial type, i.e. the reinforcement elements of the at least one carcass layer 101 lie on planes comprising the rotational axis of the tyre and substantially perpendicular to the equatorial plane of the tyre. Said reinforcement elements generally consist of textile cords, such as rayon, nylon, polyester (for example polyethylene naphthalate, PEN). Each bead structure is associated to the carcass structure by folding back of the opposite lateral edges of the at least one carcass layer 101 around the annular anchoring structure 102 so as to form the so-called carcass flaps 101A as shown in Figure 1.

In one embodiment, the coupling between the carcass structure and the bead structure can be provided by a second carcass layer (not shown in Figure 1) applied in an axially outer position with respect to the first carcass layer.

An anti-abrasive strip 105 optionally made with an elastomeric compound is arranged in an outer position of each bead structure 103.

The carcass structure is associated to a belt structure 106 comprising one or more belt layers 106a, 106b placed in radial superposition with respect to one another and with respect to the carcass layer, having typically textile and/or metallic reinforcement cords incorporated within a layer of vulcanised elastomeric compound.

Such reinforcement cords may have crossed orientation with respect to a direction of circumferential development of tyre 100. By "circumferential" direction it is meant a direction generally facing in the direction of rotation of the tyre.

At least one zero-degree reinforcement layer 106c, commonly known as a "0° belt", may be applied in a radially outermost position to the belt layers 106a, 106b, which generally incorporates a plurality of elongated reinforcement elements, typically metallic or textile cords, oriented in a substantially circumferential direction, thus forming an angle of a few degrees (such as an angle of between about 0° and 6°) with respect to a direction parallel to the equatorial plane of the tyre, and coated with vulcanised elastomeric compound.

A tread band 109 of vulcanised elastomeric compound is applied in a position radially outer to the belt structure 106.

Moreover, respective sidewalls 108 of vulcanised elastomeric compound are applied in an axially outer position on the lateral surfaces of the carcass structure, each extending from one of the lateral edges of tread 109 at the respective bead structure 103.

In a radially outer position, the tread band 109 has a rolling surface 109a intended to come in contact with the ground. Circumferential grooves, which are connected by transverse notches (not shown in Figure 1) so as to define a plurality of blocks of various shapes and sizes distributed over the rolling surface 109a, are generally made on this surface 109a, which for simplicity is represented smooth in Figure 1.

A base-layer 111 of vulcanised elastomeric compound can be arranged between the belt structure 106 and the tread band 109.

A strip consisting of elastomeric compound 110, commonly known as "mini-sidewall", of vulcanised elastomeric compound can optionally be provided in the connecting zone between sidewalls 108 and the tread band 109, this mini-sidewall generally being obtained by co-extrusion with the tread band 109 and allowing an improvement of the mechanical interaction between the tread band 109 and sidewalls 108. Preferably, the end portion of sidewall 108 directly covers the lateral edge of the tread band 109.

In the case of tubeless tyres, a rubber layer 112, generally known as "liner", which provides the necessary impermeability to the inflation air of the tyre, can also be provided in a radially inner position with respect to the carcass layer 101.

The rigidity of the tyre sidewall 108 can be improved by providing the bead structure 103 with a reinforcing layer 120 generally known as flipper or additional strip-like insert.

Flipper 120 is a reinforcing layer which is wound around the respective bead core 102 and the bead filler 104 so as to at least partially surround them, said reinforcing layer being arranged between the at least one carcass layer 101 and the bead structure 103 . Usually, the flipper is in contact with said at least one carcass layer 101 and said bead structure 103.

Flipper 120 typically comprises a plurality of textile cords incorporated within a layer of vulcanised elastomeric compound.

The bead structure 103 of the tyre may comprise a further protective layer which is generally known by the term of chafer 121 or protective strip and which has the function of increasing the rigidity and integrity of the bead structure 103.

Chafer 121 usually comprises a plurality of cords incorporated within a rubber layer of vulcanised elastomeric compound. Such cords are generally made of textile materials (such as aramide or rayon) or metal materials (such as steel cords).

A layer or sheet of elastomeric compound can be arranged between the belt structure and the carcass structure. The layer can have a uniform thickness. Alternatively, the layer may have a variable thickness in the axial direction. For example, the layer may have a greater thickness close to its axially outer edges with respect to the central (crown) zone.

Advantageously, the layer or sheet can extend on a surface substantially corresponding to the extension surface of said belt structure.

In a preferred embodiment, a layer of elastomeric compound, referred to as base-layer, can be placed between said belt structure and said tread band, said base-layer preferably extending on a surface substantially corresponding to the extension surface of said belt structure.

The elastomeric compound according to the present invention can advantageously be incorporated in one or more of the above tyre components.

According to an embodiment not shown, the tyre may be a tyre for motorcycle wheels which is typically a tyre that has a straight section featuring a high tread camber.

According to an embodiment not shown, the tyre may be a tyre for bicycle wheels. According to an embodiment not shown, the tyre may be a tyre for heavy transport vehicle wheels, such as trucks, buses, trailers, vans, and in general for vehicles in which the tyre is subjected to a high load. Preferably, such a tyre is adapted to be mounted on wheel rims having a diameter equal to or greater than 17.5 inches for directional or trailer wheels.

EXPERIMENTAL PART

The description of some preparative examples according to the invention or comparative examples, given only for illustrative and non-limiting of the scope if the invention, is set out below.

ANALYSIS METHODS

The ATR-FTIR analysis was performed with a Perkin Elmer Spectrum 100 instrument through reflected signal (Attenuated Total Reflection - ATR), spectra with a resolution of 1 cm$^{-1}$, region from 650 to 4000 cm$^{-1}$, 16 scans, detector: Deuterium triglycine sulphate (DTGS) or triglycine sulphate (TGS). (Figures 2 and 3).

The following procedure was followed:

- set FTIR according to the procedure described in the instruction manual;
- measure the base spectrum under the conditions listed above,
- place the sample being analysed on the ATR crystal, completely in contact with the surface of the crystal,
- measure the spectrum according to the above conditions,
- subtract the base spectrum from that of the sample.

The cross-linked capsules in which all the epoxy groups had reacted did not show the characteristic vibration signal of these groups around 1474 cm$^{-1}$.

Microscopic observation (SEM): Tescan VEGA TS5136XM device, detector: BSE detector, 1.89 kx magnification. This technique allows observing the present capsules inside the vulcanisable elastomeric compounds of the invention.

The samples were prepared according to the following procedure:

- the surface of the standard sample holder (disk diameter size 1 cm) is made adhesive with a conductive double-sided layer;
- the powder object of the analysis, obtained by freezing at - 60 °C by immersion of the vulcanisable compound in liquid nitrogen and subsequent pulverisation in an ultra-centrifugal mill (Retsch ZM 200 at 10,000 rpm), is deposited homogeneously on the conductive double-sided tape, so as to completely cover the surface (from 100 to 10 mg of powder) by mechanically removing excess dust;
- a thin conductive film is deposited on the sample surface (cathodic spraying technique, Mini Sputter Coater EMS 7620 instrument) in order to make the sample electrically conductive;
- insertion of the sample holder obtained inside the sample holder chamber of the instrument;
- acquisition of images following the instructions in the manual.

Determination of the melting degree of the capsules and of the softening start temperature (graph of Figure 5)

The heating behaviour of samples of a cross-linked capsule according to the invention comprising TBBS, a comparative non-cross-linked capsule and TBBS as such was evaluated.

For this analysis, an automated Buchi M-565 melting point apparatus (0.5 °C/min., standard deviation 0.03 °C) was used. The instrument measures the melting point on the basis of the light diffused by the sample inserted in a capillary and subjected to direct illumination via white LED light. In particular, the melting degree of the sample (expressed as a percentage) is correlated with the intensity of the reflected light which decreases with the increase of the liquid fraction compared to the solid one. In the case of a sample that does not melt, but shrinks as in the case of the cross-linked capsules of the invention, the intensity of the reflected light decreases anyway with increasing temperature but in a much less clear way than it happens in the case of a melting.

Figure 5 shows how both the non-cross-linked capsules and the pure TBBS showed a clear variation in the intensity of light reflected at the melting temperature of the TBBS. The cross-linked sample, on the other hand, showed a modest variation of reflected and distributed light over a wide temperature range, characteristic of a sample that shrinks but does not melt.

The start of the variation of reflected light corresponds to the softening start temperature which, for the cross-linked capsules according to the invention (Ex. 1B), was about 123-124 °C.

MDR rheometric analysis (according to ISO 6502): a rheometer Alpha Technologies type MDR2000 was used. The tests were carried out at 151°C for 60 minutes at an oscillation frequency of 1.66 Hz (100 oscillations per minute) and an oscillation amplitude of $\pm$ 0.5°, measuring the time necessary to achieve 100% (T-MH) of the maximum torque value (MH). The maximum torque value MH and the minimum torque value ML were also measured and their difference was calculated (MH-ML).

EXAMPLE 1

Preparation of capsules according to the invention and comparative (Ex. 1A-1C)

In a 5 l laboratory reactor, a solution of 160 g of Nt-butyl-2-benzothiazilsulfenamide (TBBS, Sigma Aldrich) and 160 g of ethyl cellulose (EC, Sigma Aldrich, viscosity 300 cP, 5% in toluene/ethanol 80:20, 48% ethoxy) in ethyl acetate (1.4 l) was prepared.

36 g of polyvinyl alcohol (PVA 8-88) dissolved in 3.6 l of water were added to the solution at room temperature. To homogenise the reaction mixture, an IKA Ultra-Turrax t25 basic homogeniser with dispersing elements S25N-25F was used.

16 g of trimethylolpropene triglycidyl ether (TMPGE Sigma Aldrich, 10% by weight with respect to EC) were slowly added dropwise to the emulsion, under stirring overnight, with an initial increase in the viscosity of the solution, due to the partial cross-linking of the EC by the TMPGE.

The mixture is left under stirring overnight in an open container to facilitate the evaporation of the organic solvent. The resulting dispersion was centrifuged in a Sigma 3-16k centrifuge, at 6000 rpm for 45 min. at 25 °C to obtain as residue the non-cross-linked capsules which were dried in an oven under vacuum at 50 mm Hg, at 50 °C for 24 h. The capsules thus obtained were divided into three aliquots. Two were cross-linked by heating in an oven for 10 hours at 120 °C and 90 °C respectively, supplying the cross-linked capsules according to the invention (Ex. 1A and Ex. 1B).

The third aliquot was kept at room temperature to avoid cross-linking (comparative capsules Ex. 1C). These comparative capsules are comparable to those prepared in the prior art, for example in US6984450.

The cross-linking progress was followed by IR spectroscopy, as shown in Figures 2 and 3 and as described herein in the analytical methods section.

Figure 2 highlights the signal at 1475 cm$^{-1}$ characteristic of the unreacted epoxy groups of the TMPGE (circled). In Figure 3 the presence and then the gradual disappearance of this epoxy signal can be observed initially as the cross-linking proceeds.

## EXAMPLE 2

### Capsule preparation Ex. 1 (reverse addition)

In a 5 l laboratory reactor, a solution of PVA (36 g) in water (3.6 l) (aqueous phase) was prepared and under homogenisation was slowly added a solution of 160 g of Nt-butyl-2-benzothiazilsulfenamide (TBBS, Sigma Aldrich), 160 g of ethylcellulose (EC, Sigma Aldrich, viscosity 300 cP, 5% in toluene/ethanol 80:20, 48% ethoxyls) and 16 g of trimethylolpropene triglycidyl ether (TMPGE Sigma Aldrichrich ) in ethyl acetate (1.4 l) (organic phase) previously left under stirring at room temperature for 18 hours.

The mixture was homogenised at room temperature for 10 minutes and then stirred with a mechanical stirrer, again at room temperature until the organic solvent evaporated. The colloidal dispersion thus obtained was then centrifuged with a Sigma 3-16k centrifuge, at 6000 rpm for 45 min at 25 °C and dried in an oven under vacuum at 50 mm Hg, at 50 °C for 24 h, providing a powder of non-cross-linked capsules. The powder thus obtained was then heated in an oven at 120 °C for 10 hours to complete the cross-linking, thus providing the cross-linked capsules of the invention.

### Thermal stability of the capsules

The thermal stability of the cross-linked ethyl cellulose capsules prepared in Ex. 1B according to the invention containing TBBS was verified with respect to identical but non-cross-linked capsules (Ex. 1C).

The capsules were placed in Petri dishes and heated for 24 hours in an oven at 120 °C.

As can be seen from the photographs in Figure 4, while the non-cross-linked comparative capsules of Ex. 1C flaked completely after the melting of the TBBS, which occurred between 105 °C and about 110 °C (see the samples 1C before - on the left - and after heating - on the right), those cross-linked according to the invention of Ex. 1B maintained their shape and did not flake (samples 1B).

The trend of the melting of TBBS as is, not encapsulated, of capsules comprising cross-linked TBBS of the invention was also evaluated (Ex. 1B) and non-cross-linked comparative (Ex. 1C) by heating from 80 °C to 180 °C in a Büchi melting point m-565 appliance.

As can be seen from the melting degree diagram of Figure 5, the comparative non-cross-linked capsules (Ex. 1C) were already flaking at the melting temperature of the TBBS, completely freeing the encapsulated accelerant. Instead in the case of the cross-linked capsules of the invention (Ex. 1B) at the same temperatures and well beyond, no significant collapse phenomenon occurred. By contrast, the trend of the diagram showed that at least 70-80% of the capsules according to the invention had not yet flaked at 140 °C and that even at a temperature of 160 °C, their degradation was not yet completed.

These observations confirmed the remarkable thermal stability of the present cross-linked capsules.

## EXAMPLE 3

### Preparation of a mixture of TBBS, EC and TMPGE (comparative)

A mixture of TBBS, EC and TEMPGE was prepared, in a weight ratio of 1:1:0.1, dissolving the components in dichloromethane and then evaporating the solvent at the rotavapor at 30 °C for 30 min (comparative sample Ex. 3).

## EXAMPLE 4

### Preparation of elastomeric compounds comprising butadiene rubber and styrene-butadiene in a 3/7 mixture

In this example, elastomeric compounds were prepared comprising butadiene rubber and styrene-butadiene rubber in a ratio of 3/7 and respectively cross-linked TBBS capsules according to the invention (Ex. 1A), comparative non-cross-linked TBBS capsules (e.g. 1C) or the simple mixture of the TBBS/EC/TMPGE ingredients (Ex. 3 comparative).

The elastomeric compounds of Examples 4.1 - 4.3 were prepared according to the methods described herein. The quantities of the various components are indicated in phr and shown in the following Table 1:

Table 1

| Step | Ingredients | Inv. 4.1 | Comp. 4.2 | Comp. 4.3 |
|---|---|---|---|---|
| 1-0 | BUNA CB 25 | 70 | 70 | 70 |
| 1-1 | Capsule of the invention Ex. 1A (cross-linked at 120 °C) | 5.7 | -- | -- |

(continued)

| Step | Ingredients | Inv. 4.1 | Comp. 4.2 | Comp. 4.3 |
|---|---|---|---|---|
| 1-1 | Comparative capsules Ex. 1C (non-cross-linked) | -- | 5.7 | -- |
| 1-1 | Comparative mixture TBBS /EC/ TMPGE Ex. 3 | -- | -- | 5.7 |
| 2-0 | SBR 2525 | 30 | 30 | 30 |
| 2-1 | Zinc octoate | 4 | 4 | 4 |
| 2-1 | DPG | 1 | 1 | 1 |
| 2-1 | Sulphur | 2 | 2 | 2 |

wherein BUNA CB 25 is a butadiene rubber with a high cis content (97.5%), polymerised with neodymium, from ARLANXEO, SBR is a styrene-butadiene copolymer, marketed under the name Europrene 1500 by Versalis, Zinc octoate: it is 75% zinc 2-ethylhexanoate (CAS n. 85203-81-2) supported on silica (25%), STRUKTOL ZEH 75 by SCHILL & SEILACHER, DPG: is the accelerant diphenylguanidine 80% CAS: 102-06-7, 20% of binding polymer and dispersing agents, commercial name PREMIX DPG violet 80% by RDC, Sulphur: amorphous sulphur, insoluble in $CS_2$ and in toluene. Treated with 33% hydrotreated heavy naphthenic distillate (petroleum), trade name Crystex OT33 from EASTMAN.

The mixing was carried out in several steps using the same internal Thermo Haake Reomix laboratory tangential rotor mixer (250 ml mixing chamber).

The concentrated butadiene-based masterbatch (steps 1-0 and 1-1) was then prepared, then diluting the same in a styrene-butadiene rubber (step 2-0) and finally completing the preparation with the remaining ingredients in the quantities and in the order indicated in Table 1.

In particular, in the first step (1-0), butadiene rubber was introduced and processed for 30 seconds at 60 °C (set temperature).

In the following step (1.1) TBBS was added in the forms indicated in Table 1 (Ex. 1A, and Ex. 1C and Ex. 3) and the mixing was continued for 2 minutes, until reaching 120 °C ± 5 °C, then unloading the three masterbatches.

In the following step (2-0) SBR rubber was added and the mixing continued for about 2 minutes, achieving 125 °C ± 5 °C.

After 24 hours in the following step (2-1) the vulcanising agent (Sulphur), the activating agent (Zinc octoate) and the other accelerant (DPG) were introduced, mixing for about 2 minutes, until reaching 95 °C ± 5 °C, when the compounds were unloaded.

The elastomeric compounds of Examples 4.1 - 4.3 prepared above were evaluated for the vulcanisation behaviour (at 151 °C, 60 min) by rheometric analysis and the torque measurements shown in the graph in Figure 6 and in Table 4.

From this graph it was shown that the behaviour of the compound comprising the cross-linked capsules according to the invention (Ex. 4.1) was very different compared to the compound comprising the non-cross-linked capsules (Ex. 4.2) or the reference one, including the non-encapsulated mixed ingredients (Ex. 4.3).

In fact, the curves relating to the compounds of the comparative Ex. 4.2 and 4.3 were very close and similar, while the curve related to the compound of Ex. 4.1 according to the invention appeared decidedly displaced, with vulcanisation times (T-MH) reduced by 65% with respect to the reference compound of Ex. 4.3, comprising the simple mixture of ingredients, and more than 50% compared to the compound of Ex. 4.2 comprising non-cross-linked capsules comparable to the known ones.

EXAMPLE 5

Preparation of elastomeric compounds comprising butadiene rubber and styrene-butadiene in a 3/7 mixture (capsules with different degrees of cross-linking)

In this example, capsules with different degrees of cross-linking were used for the preparation of compounds comprising butadiene rubber and styrene-butadiene rubber in a 3/7 ratio.

In particular, compounds were prepared comprising TBBS capsules cross-linked at 120 °C according to the invention of Ex. 1A (Ex. 5.2), TBBS capsules cross-linked at 90 °C according to the invention of Ex. 1B (Ex. 5.3) and the TBBS/EC/TMPGE mixture of Ex. 3 (Ex. 5.1 comparative).

The elastomeric compounds of Examples 5.1 - 5.3 below were prepared as described in Example 4. The quantities of the various components are indicated in phr and shown in the following Table 2:

Table 2

| Step | Ingredients | Comp. 5.1 | Inv. 5.2 | Inv. 5.3 |
|------|-------------|-----------|----------|----------|
|      |             |           |          |          |
| 1-0  | BR | 30.0 | 30.0 | 30.0 |
| 1-0  | Comp Mixture. (TBBS/EC/TMPGE) Ex. 3 | 5.7 | | |
| 1-0  | Capsules inv. (cross-linked at 120 °C) Ex. 1A | -- | 5.7 | -- |
| 1-0  | Capsules inv. (cross-linked at 90°C) Ex. 1B | -- | -- | 5.7 |
| 2-0  | SBR | 70.0 | 70.0 | 70.0 |
| 2-1  | Zinc octoate | 4.0 | 4.0 | 4.0 |
| 2-1  | DPG | 1.0 | 1.0 | 1.0 |
| 2-1  | SULPHUR | 2.0 | 2.0 | 2.0 |

wherein

TBBS/EC/TMPGE mix is the mixture of N-tert-butyl-2-benzothiazole-sulfenamide, ethyl cellulose, trimethylolpropene triglycidyl ether of Ex. 3 (non-encapsulated); and the other ingredients are the same as those shown in Table 1.

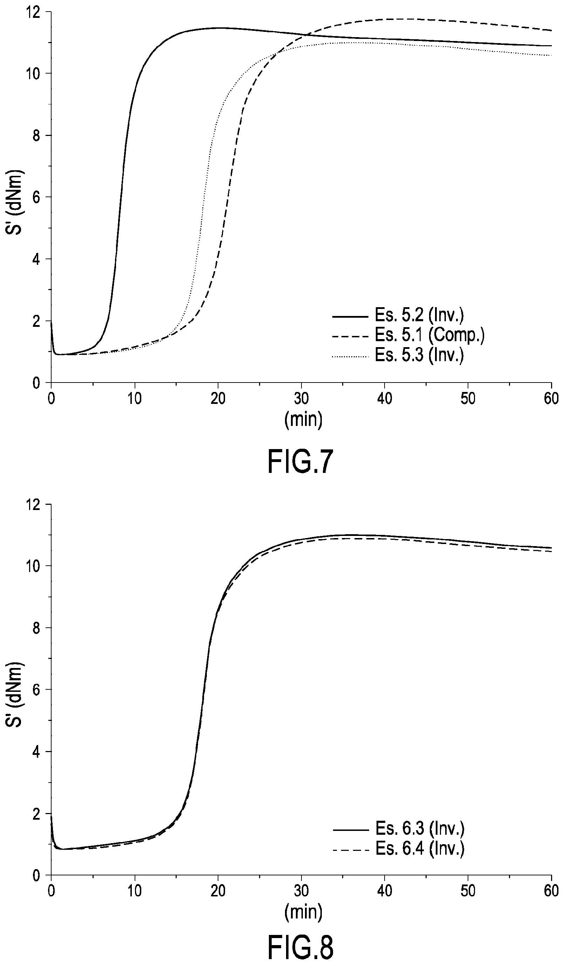

The elastomeric compounds of Examples 5.1 - 5.3 were evaluated for the vulcanisation behaviour (at 151 °C, 60 min) and the torque measurements shown in the graph in Figure 7. Table 4 shows the values of ML, MH and T-MH.

From this graph it was observed that capsules cross-linked at different temperatures (see Ex. 5.2 cross-linking at 120 °C vs Ex. 5.3 at 90 °C) led to different vulcanisation kinetics and that the capsules cross-linked at 120 °C (Ex. 5.2) gave rise to faster kinetics.

The capsules cross-linked at 90 °C according to the invention (Ex. 5.3) resulted in vulcanisation times lower than the times measured in the case of the simple mixture of TBBS/EC/TMPGE (Ex. 5.1) even if higher than those of the sample according to the invention cross-linked at 120 °C (Ex. 5.2).

EXAMPLE 6

Preparation of elastomeric compounds comprising butadiene rubber and styrene-butadiene in a 3/7 mixture (different concentrated masterbatches)

In this example elastomeric compounds were prepared comprising capsules according to the invention starting from different concentrated masterbatches, subsequently diluted to give final compounds with the same composition.

The TBBS capsules cross-linked at 90 °C of Ex. 1B according to the invention were incorporated in butadiene rubber or in butadiene-styrene rubber, yielding the concentrated masterbatches of Ex. 6.1 - 6.2, as shown in the following Table 3:

Table 3 (phr)

| Step | Concentrated masterbatches | Ex. 6.1 | Ex. 6.2 |
|------|----------------------------|---------|---------|
| 1-0  | BR | 30.00 | -- |
| 1-0  | Capsule of the invention Ex. 1B (cross-linked at 90 °C) | 5.70 | 5.70 |
| 1-0  | SBR | -- | 70.00 |
|      | vulcanisable compounds | Ex. 6.3 (Inv.) | Ex. 6.4 (Inv.) |
| 2-0  | BR | -- | 30.00 |
| 2-0  | SBR | 70.00 | -- |
| 2-1  | ZINC OCTOATE | 4.00 | 4.00 |
| 2-1  | DPG | 1.00 | 1.00 |

23

(continued)

|  | vulcanisable compounds | Ex. 6.3 (Inv.) | Ex. 6.4 (Inv.) |
|---|---|---|---|
| 2-1 | SULPHUR | 2.00 | 2.00 |

wherein
the ingredients have the same meaning shown in Table 2.

The concentrated masterbatches of Ex. 6.1 - 6.2 were mixed in a second step with the other components listed in the second part of the same Table 3 following the procedure described in Example 4, thus providing the compounds of Ex. 6.3 and 6.4 according to the invention.

The elastomeric compounds of Examples 6.3 - 6.4 were evaluated for the vulcanisation behaviour (at 151 °C, 60 min) and the torque measurements shown in the graph in Figure 8.

From this graph it was observed that the incorporation of the cross-linked capsules according to the invention in butadiene-based or styrene-butadiene-based masterbatches, rubbers with very different solubilisation features, had little influence on the vulcanisation kinetics of the corresponding samples. In fact, the vulcanisation curves of the samples of Ex. 6.3 and 6.4 appeared substantially superimposable.

Rheological properties of the compounds

The rheological properties of the compounds are summarised in the following Table 4:

Table 4

| Ex. | | ML dNm | MH dNm | T-MH min. |
|---|---|---|---|---|
| 4.1 | Inv. | 1 | 11 | 18 |
| 4.2 | Comp. | 1 | 12 | 35 |
| 4.3 | Comp. | 1 | 12 | 45 |
| 5.1 | Comp. | 1 | 12 | 40 |
| 5.2 | Inv. | 1 | 12 | 14 |
| 5.3 | Inv. | 1 | 11 | 35 |
| 6.3 | Inv. | 1 | 11 | 33 |
| 6.4 | Inv. | 1 | 11 | 33 |
| wherein MH (maximum torque): is the torque measured when cross-linking can be considered complete; MH-ML: difference between maximum torque MH and minimum torque ML; T-MH: it is the time necessary to reach the complete cross-linking of the sample. | | | | |

**Claims**

1. A capsule comprising a coating and a core, wherein

the coating comprises at least one cross-linked polymer obtained by cross-linking at least one cross-linkable polymer selected from cellulose derivatives, starch and derivatives, chitosans, alginates, polyesters, phenol-formaldehyde resins, urea-formaldehyde resins, anhydrides derivatised NR, NBR or EPDM rubbers with at least one cross-linking agent selected from among
the products having two or more epoxy groups, carboxylic groups, possibly activated as acyl halides or as esters, aldehyde groups, isocyanate groups, hydroxyl groups, halogens,
the products of formula (I)

$$Q(OR)_4 \qquad (I)$$

where Q is Sn, Si, Pb, Ge, Ti or, Zr, and R is C1-C4 alkyl,
the inorganic products of Zr, Ti and Sn,

the boron products such as boric acid and salts thereof,
the aluminium products of formula (II)

$$Al(NO_3)_3, Al_2(SO_4)_3 \text{ or } M\ Al(SO_4)_2 \qquad (II)$$

wherein M is potassium or sodium and wherein the core comprises at least one additive for tyre compounds (A).

2. The capsule according to claim 1 wherein said at least one cross-linkable polymer is a cellulose derivative selected from ethylcellulose, cellulose acetate, 2-hydroxyethylcellulose, cellulose acetate butyrate, cellulose acetate phthalate, cellulose cyanoethylate, methylcellulose, hydroxypropyl cellulose, sodium carboxymethylcellulose, hydroxypropylmethyl cellulose and methyl 2-hydroxyethyl cellulose.

3. The capsule according to any one of the preceding claims wherein said at least one additive for tyre compounds (A) is an additive selected from among vulcanising agents, activating agents, accelerant agents and retardant agents, compatibilising agents, waxes, plasticising agents, antioxidant agents, antiozone agents, resins, liquid polymers and mixtures thereof.

4. The capsule according to any one of the preceding claims which comprises 10% to 80% by weight of the at least one additive for tyre compounds (A) and 90% to 20% by weight of coating, with respect to the overall weight of the capsule.

5. A process in emulsion for preparing the capsules according to any one of the claims 1 to 4 which comprises

   - providing a solution of at least one cross-linkable polymer, selected from cellulose derivatives, starch and derivatives, chitosans, alginates, polyesters, phenol-formaldehyde resins, urea-formaldehyde resins, anhydrides derivatised NR, NBR or EPDM rubbers, at least one additive for tyre compounds (A) and, possibly, at least one cross-linking agent, in at least one suitable organic solvent immiscible with water (organic phase) wherein said organic solvent immiscible with water is preferably selected from among chlorinated solvents, aromatic and aromatic halides solvents, aliphatic hydrocarbons, esters, ethers and mixtures thereof,
   - providing an aqueous phase,
   - providing at least one non-ionic surfactant, possibly dissolved in said aqueous phase,
   - mixing together said organic phase, said aqueous phase and said at least one surfactant up to providing an emulsion,
   - adding to the emulsion, if not already present, the at least one cross-linking agent,
   - allowing the emulsion to react, preferably under stirring, in order to produce non-cross-linked capsules,
   - isolating the non-cross-linked capsules from the emulsion, and
   - subjecting the capsules to cross-linking by heating.

6. The process according to claim 5 wherein

   - said organic solvent immiscible with water is used in a weight ratio from 50:1 to 0.5:1, preferably from 20:1 to 0.7:1, more preferably from 10:1 to 1:1, even more preferably from 5:1 to 1:1, with respect to the overall weight of the at least one additive for tyre compounds (A) and of the cross-linkable polymer;
   - said cross-linkable polymer and said additive (A) are present in a weight ratio comprised between 10:1 and 0.1:1, preferably between 7:1 and 0.3:1, more preferably between 5:1 and 0.5:1, even more preferably around 1:1;
   - said cross-linking agent is present in a percentage by weight comprised between 1% and 15%, preferably between 5% and 15%, more preferably between 8% and 12%, even more preferably around 10% by weight with respect to the cross-linkable polymer;
   - said surfactant is present in a percentage by weight comprised between 0.2% and 10% by weight, preferably between 0.5% and 5% by weight, more preferably between 0.8% and 2% by weight with respect to the weight of water; and
   - the weight ratio between water and organic solvent immiscible with water is comprised between 10:1 and 0.1:1, more preferably between 5:1 and 0.5:1, even more preferably between 4:1 and 2:1.

7. The process according to claims 5 or 6 wherein:

   - the cross-linkable polymer is a cross-linkable cellulose derivative,

- the at least one additive (A) is an additive selected from among vulcanising agents, vulcanisation additives such as activating agents, accelerants and retardants, compatibilisation agents, waxes, plasticising agents, antioxidant agents, antiozone agents, resins, liquid polymers and mixtures thereof, and
- the cross-linking agent is a di- or triepoxide.

8.  The process according to any one of the claims 5 to 7 wherein the non-ionic surfactant is selected from among polyvinylalcohols, ethoxylated sorbitan derivatives, sorbitan esters, polyethoxylated castor oils, alkylpolyethyleneglycols, polyoxyethylene ethers and mixtures thereof.

9.  The process according to any one of the claims 5 to 8 wherein the cross-linking of the non-cross-linked capsules is carried out by means of their heating from 70 °C to 150 °C, for a period of 5 to 20 hours.

10. A capsule obtainable according to the process of any one of the claims 5 to 9.

11. An elastomeric composition for tyres comprising at least

    0.1 to 50 phr of at least one additive for tyre compounds (A) encapsulated in capsules according to any one of the claims 1 to 4 or 10,
    100 phr of at least one diene elastomeric polymer (B),
    0 to 120 phr of at least one reinforcing filler (C), and
    optionally, 0.1 to 15 phr of at least one vulcanising agent (D), if not already incorporated in the aforesaid capsules.

12. The elastomeric composition as claimed in claim 11, wherein

    - the a least one diene elastomeric polymer (B) is selected from cis-1,4-polyisoprene, 3,4-polyisoprene, polybutadiene, optionally halogenated isoprene/isobutene copolymers, 1,3-butadiene/acrilonitrile copolymers, styrene/1,3-butadiene copolymers, styrene/isoprene/1,3-butadiene copolymers, styrene/1,3-butadiene/acrylonitrile copolymers and mixtures thereof;
    - the at least one reinforcing filler (C) is selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof; and
    - the at least one vulcanising agent (D) is selected from among sulphur or molecules containing sulphur (sulphur donors) such as caprolactam disulphide (CLD), bis[(trialkoxysilyl)propyl]polysulphides, dithiophosphates, phosphorylpolysulphide (SDT) and mixtures thereof, preferably it is sulphur.

13. A vulcanisable elastomeric compound for tyres, obtained by mixing and possible heating of the components of the elastomeric composition for tyres according to claims 11 or 12 or a vulcanised elastomeric compound obtained by the vulcanisation thereof.

14. A process for preparing a vulcanisable elastomeric compound for tyres according to claim 13, said process comprising one or more steps of mixing at least one additive for tyre compounds (A) encapsulated in capsules according to any one of the claims 1 to 4 or 10, at least one diene elastomeric polymer (B), optionally at least one reinforcing filler (C) and optionally at least one vulcanising agent (D).

15. The process according to claim 14 wherein after the addition of said at least one additive for tyre compounds (A) encapsulated in capsules according to any one of the claims 1 to 4 or 10, the temperature of the compound being mixed does not exceed 140°C, preferably it does not exceed 120°C.

16. A tyre component comprising the vulcanisable compound according to claim 13, or the vulcanised compound obtained by the vulcanisation thereof.

17. A tyre for vehicle wheels comprising at least one tyre component according to claim 16.

18. Use of the capsule according to any one of the claims 1 to 4 or 10, for the incorporation in elastomeric compounds for tyres of at least one additive for elastomeric tyre compounds (A).

**Patentansprüche**

1.  Kapsel, umfassend eine Beschichtung und einen Kern, wobei

    die Beschichtung mindestens ein vernetztes Polymer umfasst, das durch Vernetzen mindestens eines vernetzbaren Polymers erhalten wird, das aus Cellulosederivaten, Stärke und Derivaten, Chitosanen, Alginaten, Polyestern, Phenol-Formaldehydharzen, Harnstoff-Formaldehydharzen, Anhydrid-derivatisierten NR-, NBR- oder EPDM-Kautschuken ausgewählt ist, mit mindestens einem Vernetzungsmittel erhalten wird, das ausgewählt ist aus

    den Produkten mit zwei oder mehr Epoxygruppen, Carboxylgruppen, gegebenenfalls aktiviert als Acylhalogenide oder als Ester, Aldehydgruppen, Isocyanatgruppen, Hydroxylgruppen, Halogenen,
    den Produkten der Formel (I)

    $$Q(OR)_4 \qquad (I)$$

    wobei Q. für Sn, Si, Pb, Ge, Ti oder Zr steht, und R für C1-C4-Alkyl steht,
    den anorganischen Produkten von Zr, Ti und Sn,
    den Borprodukten, beispielsweise Borsäure und Salzen davon,
    den Aluminiumprodukten der Formel (II)

    $$Al(NO_3)_3, \ Al_2(SO_4)_3 \ or \ M \, Al(SO_4)_2 \qquad (II)$$

    wobei M für Kalium oder Natrium steht, und wobei der Kern mindestens ein Additiv für Reifenmischungen (A) umfasst.

2.  Kapsel nach Anspruch 1, wobei das mindestens eine vernetzbare Polymer ein Cellulosederivat ist, das aus Ethylcellulose, Celluloseacetat, 2-Hydroxyethylcellulose, Celluloseacetatbutyrat, Cellulosacetatphthalat, Cellulosecyanoethylat, Methylcellulose, Hydroxypropylcellulose, Natriumcarboxymethylcellulose, Hydroxypropylmethylcellulose und Methyl-2-hydroxyethylcellulose ausgewählt ist.

3.  Kapsel nach einem der vorhergehenden Ansprüche, wobei das mindestens eine Additiv für Reifenmischungen (A) ein Additiv ist, das aus Vulkanisierungsmitteln, Aktivierungsmitteln, Beschleunigungsmitteln und Verzögerungsmitteln, Kompatibilisierungsmitteln, Wachsen, Plastifizierungsmitteln, Antioxidationsmitteln, Antiozonmitteln, Harzen, flüssigen Polymeren und Mischungen davon ausgewählt ist.

4.  Kapsel nach einem der vorhergehenden Ansprüche, die 10 bis 80 Gewichts% des mindestens einen Additivs für Reifenmischungen (A) und 90 bis 20 Gewichts% Beschichtung bezogen auf das Gesamtgewicht der Kapsel umfasst.

5.  Emulsionsprozess zur Herstellung der Kapseln nach einem der Ansprüche 1 bis 4, der umfasst:

    - Bereitstellen einer Lösung mindestens eines vernetzbaren Polymers, das aus Cellulosederivaten, Stärke und Derivaten, Chitosanen, Alginaten, Polyestern, Phenol-Formaldehydharzen, Harnstoff-Formaldehydharzen, Anhydriden, derivatisierten NR-, NBR- oder EPDM-Kautschuken ausgewählt wird, mindestens eines Additivs für Reifenmischungen (A) und gegebenenfalls mindestens eines Vernetzungsmittels in mindestens einem geeigneten organischen Lösungsmittel, das mit Wasser nicht vermischbar ist (organische Phase), wobei das mit Wasser nicht vermischbare organische Lösungsmittel vorzugsweise aus chlorierten Lösungsmitteln, aromatischen Lösungsmitteln und Lösungsmitteln aromatischer Halogenide, aliphatischen Kohlenwasserstoffen, Estern, Ethern und Mischungen davon ausgewählt wird,
    - Bereitstellen einer wässrigen Phase,
    - Bereitstellen mindestens eines nichtionischen Tensids, gegebenenfalls aufgelöst in der wässrigen Phase,
    - Vermischen der organischen Phase, der wässrigen Phase und des mindestens einen Tensids miteinander, um eine Emulsion bereitzustellen,
    - Zugeben des mindestens einen Vernetzungsmittels, falls nicht bereits vorhanden, zur Emulsion,
    - Reagierenlassen der Emulsion, vorzugsweise unter Rühren, um nicht vernetzte Kapseln zu erzeugen,
    - Isolieren der nicht vernetzten Kapseln aus der Emulsion und
    - Unterziehen der Kapseln Vernetzung durch Erwärmung.

6.  Prozess nach Anspruch 5, wobei

- das mit Wasser nicht vermischbare organische Lösungsmittel in einem Gewichtsverhältnis von 50:1 bis 0,5:1, vorzugsweise 20:1 bis 0,7:1, bevorzugter 10:1 bis 1:1 und noch bevorzugter 5:1 bis 1:1 bezogen auf das Gesamtgewicht des mindestens einen Additivs für Reifenmischungen (A) und des vernetzbaren Polymers verwendet wird;

- das vernetzbare Polymer und das Additiv (A) in einem Gewichtsverhältnis vorhanden sind, das zwischen 10:1 und 0,1:1, vorzugsweise zwischen 7:1 und 0,3:1, bevorzugter zwischen 5:1 und 0,5:1 und noch bevorzugter um 1:1 liegt;

- das Vernetzungsmittel in einem Gewichtsanteil vorhanden ist, der zwischen 1 und 15 Gewichts%, vorzugsweise zwischen 5 und 15 Gewichts%, bevorzugter zwischen 8 und 12 Gewichts% und noch bevorzugter um 10 Gewichts% bezogen auf das vernetzbare Polymer liegt;

- das Tensid in einem Prozentanteil vorhanden ist, der zwischen 0,2 und 10 Gewichts%, vorzugsweise zwischen 0,5 und 5 Gewichts%, bevorzugter zwischen 0,8 und 2 Gewichts% bezogen auf das Gewicht von Wasser liegt; und

- das Gewichtsverhältnis zwischen Wasser und dem mit Wasser nicht vermischbaren organischen Lösungsmittel zwischen 10:1 und 0,1:1, vorzugsweise zwischen 5:1 und 0,5:1 und bevorzugter zwischen 4:1 und 2:1 liegt.

7. Prozess nach Anspruch 5 oder 6, wobei:

- das vernetzbare Polymer ein vernetzbares Cellulosederivat ist,
- das mindestens eine Additiv (A) ein Additiv ist, das aus Vulkanisierungsmitteln, Vulkanisierungsadditiven, beispielsweise Aktivierungsmitteln, Beschleunigungsmitteln und Verzögerungsmitteln, Kompatibilisierungsmitteln, Wachsen, Plastifizierungsmitteln, Antioxidationsmitteln, Antiozonmitteln, Harzen, flüssigen Polymeren und Mischungen davon ausgewählt wird, und
- das Vernetzungsmittel ein Di- oder Triepoxid ist.

8. Prozess nach einem der Ansprüche 5 bis 7, wobei das nichtionische Tensid aus Polyvinylalkoholen, ethoxylierten Sorbitanderivaten, Sorbitanestern, polyethoxylierten Kastorölen, Alkylpolyethylenglycolen, Polyoxyethylenethern und Mischungen davon ausgewählt wird.

9. Prozess nach einem der Ansprüche 5 bis 8, wobei das Vernetzen der nicht vernetzten Kapseln mittels ihrer Erwärmung von 70 °C bis 150 °C für einen Zeitraum von 5 bis 20 Stunden ausgeführt wird.

10. Kapsel, die gemäß dem Prozess nach einem der Ansprüche 5 bis 9 erhalten werden kann.

11. Elastomerzusammensetzung für Reifen, umfassend mindestens

0,1 bis 50 phr mindestens eines in Kapseln nach einem der Ansprüche 1 bis oder 10 eingekapselten Additivs für Reifenmischungen (A),
100 phr mindestens eines elastomeren Dienpolymers (B),
0 bis 120 phr mindestens eines Verstärkerfüllstoffs (C) und
gegebenenfalls 0,1 bis 15 phr mindestens eines Vulkanisierungsmittels (D), falls nicht bereits in die zuvor erwähnten Kapseln eingemischt.

12. Elastomerzusammensetzung nach Anspruch 11, wobei

- das mindestens eine elastomere Dienpolymer (B) aus cis-1,4-Polyisopren, 3,4-Polyisopren, Polybutadien, gegebenenfalls halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren und Mischungen davon ausgewählt ist;
- der mindestens eine Verstärkerfüllstoff (C) aus Ruß, herkömmlichem Siliciumdioxid, beispielsweise Siliciumdioxid aus mit starken Säuren ausgefälltem Sand, vorzugsweise amorpher Diatomeenerde, Natriumcarbonat, Titandioxid, Talk, Aluminiumoxid, Aluminiumsilikaten, Kaolin, Silikatfasern und Mischungen davon ausgewählt ist; und
- das mindestens ein Vulkanisierungsmittel (D) aus Schwefel oder Molekülen, die Schwefel enthalten (Schwefeldonatoren), beispielsweise Caprolactamdisulphid (CLD), Bis[(trialkoxysilyl)propyl]polysulphiden, Dithiophosphaten, Phosphorylpolysulphid (SDT) und Mischungen davon ausgewählt, wobei es vorzugsweise Schwefel ist.

13. Vulkanisierbare Elastomerverbindung für Reifen, die durch Mischen und gegebenenfalls Erwärmen der Komponenten der Elastomerzusammensetzung für Reifen nach Anspruch 11 oder 12 erhalten wird, oder vulkanisierbare Elastomerverbindung, die durch die Vulkanisierung davon erhalten wird.

14. Prozess zur Herstellung einer vulkanisierbaren Elastomerverbindung für Reifen nach Anspruch 13, wobei der Prozess einen oder mehrere Schritte des Mischens mindestens eines in Kapseln nach einem der Ansprüche 1 bis 4 oder 10 eingekapselten Additivs für Reifenmischungen (A), mindestens eines elastomeren Dienpolymers (B), gegebenenfalls mindestens eines Verstärkerfüllstoffs (C) und gegebenenfalls mindestens eines Vulkanisierungsmittels umfasst.

15. Prozess nach Anspruch 14, wobei nach der Zugabe des mindestens einen in Kapseln nach einem der Ansprüche 1 bis 4 oder 10 eingekapselten Additivs für Reifenmischungen (A) die Temperatur der Verbindung, die gemischt wird, 140 °C nicht überschreitet, vorzugsweise 120 °C nicht überschreitet.

16. Reifenkomponente, umfassend die vulkanisierbare Verbindung nach Anspruch 13 oder die durch Vulkanisierung davon erhaltene vulkanisierbare Verbindung.

17. Reifen für Fahrzeugräder, umfassend mindestens eine Reifenkomponente nach Anspruch 16.

18. Verwendung der Kapsel nach einem der Ansprüche 1 bis 4 oder 10 zur Einmischung in Elastomerverbindungen für Reifen mindestens eines Additivs für elastomere Reifenmischungen (A).

## Revendications

1. Capsule comprenant un revêtement et un noyau, dans laquelle

le revêtement comprend au moins un polymère réticulé obtenu par réticulation d'au moins un polymère réticulable choisi parmi les dérivés de cellulose, l'amidon et ses dérivés, les chitosanes, les alginates, les polyesters, les résines phénol-formaldéhyde, les résines urée-formaldéhyde, les caoutchoucs NR, NBR ou EPDM dérivés avec des anhydrides avec au moins un agent de réticulation choisi parmi
les produits ayant au moins deux groupes époxy, groupes carboxyliques, éventuellement activés sous forme d'halogénures d'acyle ou d'esters, groupes aldéhyde, groupes isocyanate, groupes hydroxyle, halogènes, les produits de formule (I)

$$Q(OR)_4 \qquad (I)$$

où Q est Sn, Si, Pb, Ge, Ti ou, Zr et R est un alkyle en C1-C4,
les produits inorganiques de Zr, Ti et Sn,
les produits du bore tels que l'acide borique et ses sels,
les produits d'aluminium de formule (II)

$$Al(NO_3)_3, Al_2(SO_4)_3 \text{ or } M \, Al(SO_4)_2 \qquad (II)$$

où M est le potassium ou le sodium et où le noyau comprend au moins un additif pour des composés de pneu (A).

2. Capsule selon la revendication 1, dans laquelle ledit au moins un polymère réticulable est un dérivé de cellulose choisi parmi l'éthylcellulose, l'acétate de cellulose, la 2-hydroxyéthylcellulose, l'acétate butyrate de cellulose, l'acétate phtalate de cellulose, le cyanoéthylate de cellulose, la méthylcellulose, l'hydroxypropylcellulose, la carboxyméthylcellulose sodique, l'hydroxypropylméthyl cellulose et la 2-hydroxyéthylcellulose de méthyle.

3. Capsule selon l'une quelconque des revendications précédentes, dans laquelle ledit au moins un additif pour composés de pneu (A) est un additif choisi parmi les agents de vulcanisation, les agents d'activation, les agents accélérateurs et les agents retardateurs, les agents de compatibilité, les cires, les agents plastifiants, les agents antioxydants, les agents anti-ozone, les résines, les polymères liquides et leurs mélanges.

4. Capsule selon l'une quelconque des revendications précédentes, qui comprend 10% à 80% en poids de l'au moins un additif pour des composés de pneu (A) et 90% à 20% en poids de revêtement, par rapport au poids total de la capsule.

5. Procédé en émulsion pour la préparation des capsules selon l'une quelconque des revendications 1 à 4 qui comprend

- la fourniture d'une solution d'au moins un polymère réticulable, choisi parmi les dérivés de cellulose, l'amidon et ses dérivés, les chitosanes, les alginates, les polyesters, les résines phénol-formaldéhyde, les résines urée-formaldéhyde, les caoutchoucs NR, NBR ou EPDM dérivés avec des anhydrides, au moins un additif pour des composés de pneu (A) et, éventuellement, au moins un agent de réticulation, dans au moins un solvant organique approprié non miscible à l'eau (phase organique) où ledit solvant organique non miscible à l'eau est de préférence choisi parmi les solvants chlorés, les solvants aromatiques et halogénés aromatiques, les hydrocarbures aliphatiques, les esters, les éthers et leurs mélanges,
- la fourniture d'une phase aqueuse,
- la fourniture d'au moins un tensioactif non ionique, éventuellement dissous dans ladite phase aqueuse,
- le mélange de ladite phase organique, de ladite phase aqueuse et dudit au moins un tensioactif jusqu'à l'obtention d'une émulsion,
- l'ajout à l'émulsion, s'il n'est pas déjà présent, de l'au moins un agent de réticulation,
- la mise en réaction de l'émulsion, de préférence sous agitation, afin de produire des capsules non réticulées,
- l'isolation des capsules non réticulées de l'émulsion, et
- la soumission des capsules à une réticulation par chauffage.

6. Procédé selon la revendication 5, dans lequel

- ledit solvant organique non miscible à l'eau est utilisé dans un rapport pondéral de 50:1 à 0,5:1, de préférence de 20:1 à 0,7:1, plus préférablement de 10:1 à 1:1, encore plus préférablement de 5:1 à 1:1, par rapport au poids total de l'au moins un additif pour des composés de pneu (A) et du polymère réticulable ;
- ledit polymère réticulable et ledit additif (A) sont présents dans un rapport pondéral compris entre 10:1 et 0,1:1, de préférence entre 7:1 et 0,3:1, plus préférablement entre 5:1 et 0,5:1, encore plus préférablement d'environ 1:1 ;
- ledit agent de réticulation est présent en un pourcentage en poids compris entre 1% et 15%, de préférence entre 5% et 15%, plus préférablement entre 8% et 12%, encore plus préférablement d'environ 10% en poids par rapport au polymère réticulable ;
- ledit tensioactif est présent en un pourcentage en poids compris entre 0,2% et 10% en poids, de préférence entre 0,5% et 5% en poids, plus préférablement entre 0,8% et 2% en poids par rapport au poids de l'eau ; et
- le rapport pondéral entre l'eau et le solvant organique non miscible à l'eau est compris entre 10:1 et 0,1:1, plus préférablement entre 5:1 et 0,5:1, encore plus préférablement entre 4:1 et 2:1.

7. Procédé selon les revendications 5 ou 6, dans lequel :

- le polymère réticulable est un dérivé de cellulose réticulable,
- l'au moins un additif (A) est un additif choisi parmi les agents de vulcanisation, les additifs de vulcanisation tels que les agents d'activation, les accélérateurs et retardateurs, les agents de compatibilité, les cires, les agents plastifiants, les agents antioxydants, les agents anti-ozone, les résines, les polymères liquides et leurs mélanges, et
- l'agent de réticulation est un di- ou triépoxyde.

8. Procédé selon l'une quelconque des revendications 5 à 7, dans lequel le tensioactif non ionique est choisi parmi les alcools polyvinyliques, les dérivés de sorbitan éthoxylé, les esters de sorbitan, les huiles de ricin polyéthoxylées, les alkylpolyéthylèneglycols, les éthers de polyoxyéthylène et leurs mélanges.

9. Procédé selon l'une quelconque des revendications 5 à 8, dans lequel la réticulation des capsules non réticulées est réalisée au moyen de leur chauffage de 70°C à 150°C, pendant une durée de 5 à 20 heures.

10. Capsule pouvant être obtenue selon le procédé de l'une quelconque des revendications 5 à 9.

11. Composition élastomère pour pneus comprenant au moins

0,1 à 50 phr d'au moins un additif pour composés de pneu (A) encapsulé dans des capsules selon l'une quelconque des revendications 1 à 4 ou 10,
100 phr d'au moins un polymère élastomère diénique (B),
0 à 120 phr d'au moins une charge de renforcement (C), et

éventuellement 0,1 à 15 phr d'au moins un agent de vulcanisation (D), s'il n'est pas déjà incorporé dans les capsules précitées.

12. Composition élastomère telle que revendiquée dans la revendication 11, dans laquelle

- l'au moins un polymère élastomère diénique (B) est choisi parmi le cis-1,4-polyisoprène, le 3,4-polyisoprène, le polybutadiène, les copolymères isoprène/isobutène éventuellement halogénés, les copolymères 1,3-butadiène/acrilonitrile, les copolymères styrène/1,3-butadiène, les copolymères styrène/isoprène/1,3-butadiène, les copolymères styrène/1,3-butadiène/acrylonitrile et leurs mélanges ;
- l'au moins une charge de renforcement (C) est choisie parmi le noir de carbone, la silice conventionnelle, telle que la silice de sable précipité avec des acides forts, de préférence amorphe, la terre de diatomées, le carbonate de calcium, le dioxyde de titane, le talc, l'alumine, les aluminosilicates, le kaolin, des fibres de silicate et leurs mélanges ; et
- l'au moins un agent de vulcanisation (D) est choisi parmi le soufre ou des molécules contenant du soufre (donneurs de soufre) telles que le disulfure de caprolactame (CLD), les bis[(trialcoxysilyl)propyl]polysulfures, les dithiophosphates, le phosphorylpolysulfure (SDT) et leurs mélanges, de préférence il s'agit du soufre.

13. Composé élastomère vulcanisable pour pneus, obtenu par mélange et chauffage éventuel des composants de la composition élastomère pour pneus selon les revendications 11 ou 12 ou un composé élastomère vulcanisé obtenu par la vulcanisation de ceux-ci.

14. Procédé de préparation d'un composé élastomère vulcanisable pour pneus selon la revendication 13, ledit procédé comprenant une ou plusieurs étapes de mélange d'au moins un additif pour composés de pneu (A) encapsulé dans des capsules selon l'une quelconque des revendications 1 à 4 ou 10, d'au moins un polymère élastomère diénique (B), éventuellement d'au moins une charge de renforcement (C) et éventuellement d'au moins un agent de vulcanisation (D).

15. Procédé selon la revendication 14, dans lequel après l'ajout dudit au moins un additif pour composés de pneu (A) encapsulé dans des capsules selon l'une quelconque des revendications 1 à 4 ou 10, la température du composé mélangé ne dépasse pas 140°C, de préférence elle ne dépasse pas 120°C.

16. Composant de pneu comprenant le composé vulcanisable selon la revendication 13, ou le composé vulcanisé obtenu par la vulcanisation de celui-ci.

17. Pneu pour roues de véhicule comprenant au moins un composant de pneu selon la revendication 16.

18. Utilisation de la capsule selon l'une quelconque des revendications 1 à 4 ou 10, pour l'incorporation dans des composés élastomères pour pneus d'au moins un additif pour des composés de pneu (A) élastomères.

FIG.1

**FIG.2**

- - - - TMPGE

———— TMPGE+EC

EP 3 898 823 B1

FIG.3

FIG.4

FIG.5

FIG.6

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6984450 B
- JP 2002226635 A
- EP 1915424 A1
- WO 2005108480 A1
- EP 3476893 A1

**Non-patent literature cited in the description**

- *CHEMICAL ABSTRACTS,* 85203-81-2
- *CHEMICAL ABSTRACTS,* 102-06-7